# EUROPEAN PATENT SPECIFICATION

(11) **EP 4 434 311 B1**
(45) Date of publication and mention of the grant of the patent: **30.09.2026**
(21) Application number: 22898638.6
(22) Date of filing: 25.11.2022
(51) Int. Cl.: G05D 1/224, G05D 1/229, A01B 69/00, G09B 29/00, G09B 29/10, G08G 1/00, G08G 1/09, G08G 1/0969, G01C 21/34, G16Y 10/40, G16Y 40/60, G06Q 10/06, G06Q 50/02

(54) **ROUTE-PLANNING SYSTEM FOR SELF-DRIVING AGRICULTURAL MACHINE**
ROUTENPLANUNGSSYSTEM FÜR SELBSTFAHRENDE LANDWIRTSCHAFTLICHE MASCHINE
SYSTÈME DE PLANIFICATION D'ITINÉRAIRE POUR MACHINE AGRICOLE À CONDUITE AUTONOME

(30) Priority: 25.11.2021 JP 2021191198; 25.11.2021 JP 2021191199
(43) Date of publication of application: 25.09.2024
(73) Proprietor: Kubota Corporation, Osaka-shi, Osaka 530-0011 (JP)
(72) Inventor: MIYASHITA, Shunsuke, Sakai-shi, Osaka 590-0908 (JP); MURATA, Yusuke, Sakai-shi, Osaka 590-0908 (JP)
(74) Representative: Cabinet Beau de Loménie
(86) International application number: PCT/JP2022/043469
(87) International publication number: WO 2023/095856

(56) References cited:
- EP-A1- 3 473 070
- WO-A1-2021/006321
- JP-A- 2013 230 088
- JP-A- 2017 221 164
- JP-A- 2019 028 688
- JP-A- 2019 175 262
- JP-A- H11 266 608

## Description

### TECHNICAL FIELD

The present disclosure relates to path planning systems for agricultural machines performing self-driving.

### BACKGROUND ART

Research and development has been directed to the automation of agricultural machines to be used in agricultural fields. For example, work vehicles, such as tractors, combines, and rice transplanters, which automatically travel within fields by utilizing a positioning system, e.g., a GNSS (Global Navigation Satellite System), are coming into practical use. Research and development is also under way for work vehicles which automatically travel not only within fields, but also outside the fields.

Patent Documents 1 and 2 each disclose an example of system to cause an unmanned work vehicle to automatically travel between two fields separated from each other with a road being sandwiched therebetween.

### CITATION LIST

### PATENT LITERATURE

[Patent Document 1] Japanese Laid-Open Patent JP 2021-073602 A
[Patent Document 2] Japanese Laid-Open Patent JP 2021-029218 A

A path generation unit generates an operation path for each of a plurality of operation regions, and an automatic travel control unit causes an operation vehicle to travel automatically along the operation path generated by the path generation unit, and the path generation unit connects different operation regions by causing the operation vehicle to travel outside the operation regions according to WO 2021/006321 A1.

A work traveling route calculation section calculates a work traveling route based on field information and specification of a field work vehicle, the work traveling route interconnecting a traveling work starting point and a traveling work ending point; a fore traveling route calculation section calculates a fore traveling route extending from a entrance/exit area to the traveling work starting point of the work traveling route; and a post traveling route calculation section calculates a post traveling route extending from the traveling work ending point to the entrance/exit area according to EP 3 473 070 A1.

### SUMMARY OF INVENTION

### TECHNICAL PROBLEM

The present disclosure provides techniques to allow path planning, for an agricultural machine performing self-driving, to be performed more efficiently.

### SOLUTION TO PROBLEM

The invention is defined in the claims.

General or specific aspects of the present disclosure may be implemented using a device, a system, a method, an integrated circuit, a computer program, a non-transitory computer-readable storage medium, or any combination thereof. The computer-readable storage medium may be inclusive of a volatile storage medium or a non-volatile storage medium. The device may include a plurality of devices. In the case where the device includes two or more devices, the two or more devices may be disposed within a single apparatus, or divided over two or more separate apparatuses.

### ADVANTAGEOUS EFFECTS OF INVENTION

According to embodiments of the present disclosure, it is possible to achieve more efficient path planning for agricultural machines performing self-driving.

### BRIEF DESCRIPTION OF DRAWINGS

[FIG. **1]** FIG. **1** is a diagram providing an overview of an agriculture management system which may be configured for constituting an illustrative system of the invention.
[FIG. **2]** FIG. **2** is a side view schematically showing an example of work vehicle and an example of implement that is linked to the work vehicle.
[FIG. **3]** FIG. **3** is a block diagram showing an example configuration of the work vehicle and the implement.
[FIG. **4]** FIG. **4** is a conceptual diagram showing an example of the work vehicle performing positioning based on an RTK-GNSS.
[FIG. **5]** FIG. **5** is a diagram showing an example of operational terminal and an example of operation switches disposed in a cabin.
[FIG. **6]** FIG. **6** is a block diagram showing an example of hardware configuration of a management device and a terminal device.
[FIG. **7]** FIG. **7** is a diagram schematically showing an example of the work vehicle automatically traveling along a target path inside a field.
[FIG. **8]** FIG. **8** is a flowchart showing an example operation of steering control during self-driving.
[FIG. **9A]** FIG. **9A** is a diagram showing an example of the work vehicle traveling along a target path **P.**
[FIG. **9B]** FIG. **9B** is a diagram showing an example of the work vehicle at a position which is shifted rightward from the target path **P.**
[FIG. **9C]** FIG. **9C** is a diagram showing an example of the work vehicle at a position which is shifted leftward from the target path **P.**
[FIG. **9D]** FIG. **9D** is a diagram showing an example of the work vehicle oriented in an inclined direction with respect to the target path **P.**
[FIG. **10]** FIG. **10** is a diagram schematically showing an example of state where a plurality of the work vehicles perform self-traveling inside a field and on a road outside the field.
[FIG. **11]** FIG. **11** is a diagram showing an example of setting screen displayed on the terminal device.
[FIG. **12]** FIG. **12** is a table showing an example of schedule of agricultural work created by the management device.
[FIG. **13]** FIG. **13** is a diagram showing an example of map that is referred to at the time of path planning for a configuration of a system of the invention.
[FIG. **14]** FIG. **14** is a diagram showing an example of global path.
[FIG. **15]** FIG. **15** is a table showing an example of correspondence between waiting areas and fields for a configuration of a system of the invention.
[FIG. **16]** FIG. **16** is a diagram showing an example of global path generated on one working day.
[FIG. **17]** FIG. **17** is a flowchart showing an example operation for a configuration variant of a system of the invention in which the operational terminal generates a path inside a field and the management device generates a path outside the field.
[FIG. **18]** FIG. **18** is a diagram showing an example of global path and an example of local path generated in an environment where there is an obstacle.
[FIG. **19]** FIG. **19** is a flowchart showing a method for path planning and travel control.
[FIG. **20]** FIG. **20** is a diagram showing an example of environment where trees are distributed around an agricultural road at a high density.
[FIG. **21]** FIG. **21** is a diagram showing an example of map having information acquired by sensing added thereto.

### DESCRIPTION OF EMBODIMENTS

### (Definition of terms)

In the present disclosure, an "agricultural machine" refers to a machine for agricultural applications. Examples of agricultural machines include tractors, harvesters, rice transplanters, vehicles for crop management, vegetable transplanters, mowers, seeders, spreaders, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as tilling, seeding, preventive pest control, manure spreading, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Self-driving" refers to controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work (e.g., the operation of the implement) may be controlled automatically. In the case where the agricultural machine is a vehicle-type machine, travel of the agricultural machine via self-driving will be referred to as "self-traveling". The controller may control at least one of: steering that is required in the movement of the agricultural machine, adjustment of the moving speed, or beginning and ending of a move. In the case of controlling a work vehicle having an implement attached thereto, the controller may be configured or programmed to control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also move partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering". A portion of, or the entirety of, the controller may reside outside the agricultural machine. Control signals, commands, data, etc. may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel inside the field or outside the field (e.g., on roads) in an unmanned manner. During an autonomous move, operations of detecting and avoiding obstacles may be performed.

A "work plan" is data defining a plan of one or more tasks of agricultural work to be performed by an agricultural machine. The work plan includes information representing the order of the tasks of agricultural work to be performed by an agricultural machine or the field where each of the tasks of agricultural work is to be performed. The work plan includes information representing the time and the date when each of the tasks of agricultural work is to be performed. In particular, the work plan including information representing the time and the date when each of the tasks of agricultural work is to be performed is referred to as a "work schedule" or simply as a "schedule". The work schedule may include information representing the time when each task of agricultural work is to be begun and/or ended on each of working days. The work plan or the work schedule may include information representing, for each task of agricultural work, the contents of the task, the implement to be used, and/or the types and amounts of agricultural supplies to be used. As used herein, the term "agricultural supplies" refers to goods used for agricultural work to be performed by an agricultural machine. The agricultural supplies may also be referred to simply as "supplies". The agricultural supplies may include goods consumed by agricultural work such as, for example, agricultural chemicals, fertilizers, seeds, or seedlings. The work plan may be created by a processing unit communicating with the agricultural machine to manage the agricultural machine or a processing unit mounted on the agricultural machine. The processing unit can create a work plan based on, for example, information input by the user (agricultural business executive, agricultural worker, etc.) manipulating a terminal device. In this specification, the processing unit communicating with the agricultural machine to manage the agricultural machine will be referred to as a "management device". The management device may manage agricultural work of a plurality agricultural machines. In this case, the management device may create a work plan including information on each task of agricultural work to be performed by each of the plurality of agricultural machines. The work plan may be downloaded to each of the agricultural machines and stored in a storage device in each of the agricultural machines. In order to perform the scheduled agricultural work in accordance with the work plan, each agricultural machine can automatically move to a field and perform the agricultural work.

An "environment map" is data representing, with a predetermined coordinate system, the position or the region of an object existing in the environment where the agricultural machine moves. The environment map may be referred to simply as a "map" or "map data". The coordinate system defining the environment map is, for example, a world coordinate system such as a geographic coordinate system fixed to the globe. Regarding the object existing in the environment, the environment map may include information other than the position (e.g., attribute information or other types of information). The "environment map" encompasses various type of maps such as a point cloud map and a lattice map. Data on a local map or a partial map that is generated or processed in a process of constructing the environment map is also referred to as a "map" or "map data".

A "global path" is data on a path connecting a departure point to a target point of an automatic movement of the agricultural machine, and is generated by a processing unit performing path planning. Generation of such a global path is referred to as "global path planning". In the following description, the global path will be referred to also as a "target path" or simply as a "path". The global path may be defined by, for example, coordinate values of a plurality of points which the agricultural machine is to pass. Such a point that the agricultural machine is to pass is referred as a "waypoint", and a line segment connecting waypoints adjacent to each other is referred to as a "link".

A "local path" is a path by which the agricultural machine can avoid an obstacle, and is consecutively generated while the agricultural machine is automatically moving along the global path. Generation of such a local path is referred to as "local path planning". The local path is consecutively generated based on data acquired by one or more sensing devices included in the agricultural machine, during a movement of the agricultural machine. The local path may be defined by a plurality of waypoints along a portion of the global path. Note that in the case where there is an obstacle in the vicinity of the global path, the waypoints may be set so as to detour around the obstacle. The length of a link between the waypoints on the local path is shorter than the length of a link between the waypoints on the global path. The device generating the local path may be the same as, or different from, the device generating the global path. For example, the management device managing the agricultural work to be performed by the agricultural machine may generate the global path, whereas the controller mounted on the agricultural machine may generate the local path. In this case, a combination of the management device and the controller functions as a "processing unit" performing the path planning. The controller of the agricultural machine may function as a processing unit performing both of global path planning and local path planning.

An "agricultural road" is a road used mainly for agriculture. An "agricultural road" is not limited to a road paved with asphalt, and encompasses unpaved roads covered with soil, gravel or the like. An "agricultural road" encompasses roads (including private roads) on which only vehicle-type agricultural machines (e.g., work vehicles such as tractors, etc.) are allowed to travel and roads on which general vehicles (automobiles, trucks, buses, etc.) are also allowed to travel. The work vehicles may automatically travel on a general road in addition to an agricultural road. The "general road" is a road maintained for traffic of general vehicles.

A "repository" is a site provided for storage of an agricultural machine. The repository may be, for example, a site managed by a user of an agricultural machine or a site run jointly by a plurality of users of agricultural machines. The repository may be, for example, a site saved for storage of an agricultural machine, such as a warehouse, a barn or a parking area at a house or an office of the user (agricultural worker, etc.). The position of the repository may be previously registered and recorded in a storage device.

A "waiting area" is a site provided for an agricultural machine to wait while the agricultural machine does not perform agricultural work. One or more waiting areas may be provided in an environment where an agricultural machine performs self-driving. The above-described repository is an example of the waiting area. The waiting area may be managed or used jointly by a plurality of users. The waiting area may be, for example, a warehouse, a garage, a barn, a parking area, or any other facilities. The waiting area may be a warehouse, a barn, a garage or a parking area at a house or an office of an agricultural worker different from the user of the agricultural machine. A plurality of waiting areas may be scattered in the environment where an agricultural machine moves. In the waiting area, work such as replacement or maintenance of a portion or an implement of the agricultural machine, or supplement of supplies, may be performed. In this case, parts, tools or supplies necessary for the work may be provided in the waiting area.

### (Embodiments)

Hereinafter, embodiments of the present disclosure will be described, wherein the invention involves functions or operations illustrated below in the section "2-3. Path Planning". Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of the claims. In the following description, elements having identical or similar functions are denoted by identical reference numerals.

The invention is defined in the claims. For example, numerical values, shapes, materials, steps, orders of steps, layout of a display screen, etc., which are indicated in the following embodiments are only exemplary, and admit of various modifications so long as it makes technological sense. Any one implementation may be combined with another so long as it is within the scope of the claims.

Hereinafter, embodiments in which techniques according to the present disclosure are applied to a work vehicle, such as a tractor, which is an example of agricultural machine, will be mainly described. The techniques according to the present disclosure are also applicable to other types of agricultural machines in addition to the work vehicle such as a tractor.

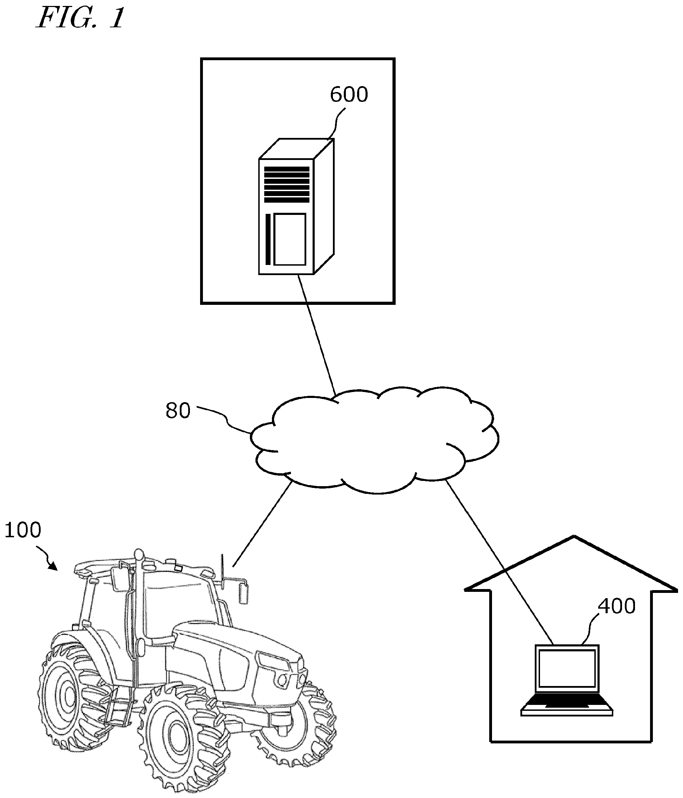

FIG. 1 is a diagram providing an overview of an agriculture management system according to an illustrative embodiment of the present disclosure. The agriculture management system shown in FIG. **1** includes a work vehicle **100,** a terminal device **400,** and a management device **600.** The terminal device **400** is a computer used by a user performing remote monitoring of the work vehicle **100.** The management device **600** is a computer managed by a business operator running the agriculture management system. The work vehicle **100,** the terminal device **400** and the management device **600** can communicate with each other via the network **80.** FIG. **1** shows one work vehicle **100,** but the agriculture management system may include a plurality of the work vehicles or any other agricultural machine.

The work vehicle **100** according to the present embodiment is a tractor. The work vehicle **100** can have an implement attached to its rear and/or its front. While performing agricultural work in accordance with a particular type of implement, the work vehicle **100** is able to travel inside a field. The work vehicle **100** may travel inside the field or outside the field with no implement being attached thereto.

The work vehicle **100** has a self-driving function. In other words, the work vehicle **100** can travel by the action of a controller, rather than manually. The controller according to the present embodiment is provided inside the work vehicle **100,** and is able to control both the speed and steering of the work vehicle **100.** The work vehicle **100** can perform self-traveling outside the field (e.g., on roads) as well as inside the field.

The work vehicle **100** includes a device usable for positioning or localization, such as a GNSS receiver or an LiDAR sensor. Based on the position of the work vehicle **100** and information on a target path, the controller of the work vehicle **100** causes the work vehicle **100** to automatically travel. In addition to controlling the travel of the work vehicle **100,** the controller also controls the operation of the implement. As a result, while automatically traveling inside the field, the work vehicle **100** is able to perform agricultural work by using the implement. In addition, the work vehicle **100** is able to automatically travel along the target path on a road outside the field (e.g., an agricultural road or a general road). In the case of performing self-traveling on a road outside the field, the work vehicle **100** travels while generating, along the target path, a local path along which the work vehicle **100** can avoid an obstacle, based on data output from a sensing device such as a camera or a LiDAR sensor. Inside the field, the work vehicle **100** may travel while generating a local path in substantially the same manner as described above, or may perform an operation of traveling along the target path without generating a local path and halting when an obstacle is detected.

The management device **600** is a computer to manage the agricultural work performed by the work vehicle **100.** The management device **600** may be, for example, a server computer that performs centralized management on information regarding the field on the cloud and supports agriculture by use of the data on the cloud. The management device **600,** for example, creates a work plan for the work vehicle **100** and performs global path planning for the work vehicle **100** in accordance with the work plan. The management device **600** generates a global path (target path) inside the field and a global path (target path) outside the field by different methods from each other. The management device **600** generates a target path inside the field based on information regarding the field. For example, the management device **600** can generate a target path inside the field based on various types of previously registered information such as the outer shape of the field, the area size of the field, the position of the entrance/exit of the field, the width of the work vehicle **100,** the width of the implement, the contents of the work, the types of crops to be grown, the region where the crops are to be grown, the growing states of the crops, and the interval between rows or ridges of the crops. The management device **600** generates a target path inside the field based on, for example, information input by the user by use of the terminal device **400** or any other device. The management device **600** generates a path inside the field such that the path covers, for example, the entirety of a work area where the work is to be performed. Meanwhile, the management device **600** generates a path outside the field in accordance with the work plan. For example, the management device **600** can generate a target path outside the field based on various types of information such as the order of tasks of agricultural work indicated by the work plan, the position of the field where each task of agricultural work is to be performed, the position of the entrance/exit of the field, the time when each task of agricultural work is to begin and/or end, the state of the road surface, the state of weather or the traffic state. The work plan includes information representing an order of agricultural tasks to be performed by the agricultural machine, the fields where the tasks are to be performed, and date and time when each task is to be performed. In addition to generating a target path based on information representing the path, the management device **600** may generate or edit an environment map based on data collected by the work vehicle **100** or any other movable body by use of the sensing device such as a LiDAR sensor. The management device **600** transmits data on the work plan, the target path and the environment map thus generated to the work vehicle **100.** The work vehicle **100** automatically moves and performs agricultural work based on the data.

The global path planning and the generation (or editing) of the environment map may be performed by any other device than the management device **600.** For example, the controller of the work vehicle **100** may perform global path planning, or the generation or editing of the environment map.

The terminal device **400** is a computer that is used by a user who is at a remote place from the work vehicle **100.** The terminal device **400** shown in FIG. 1 is a laptop computer, but the terminal device **400** is not limited to this. The terminal device **400** may be a stationary computer such as a desktop PC (personal computer), or a mobile terminal such as a smartphone or a tablet computer. The terminal device **400** may be used to perform remote monitoring of the work vehicle **100** or remote-manipulate the work vehicle **100.** For example, the terminal device **400** can display, on a display screen thereof, a video captured by one or more cameras (imagers) included in the work vehicle **100.** The user can watch the video to check the state of the surroundings of the work vehicle **100** and instruct the work vehicle **100** to halt or begin traveling. The terminal device **400** can also display, on the display screen thereof, a setting screen allowing the user to input information necessary to create a work plan (e.g., a schedule of each task of agricultural work) for the work vehicle **100.** When the user inputs necessary information to the setting screen and performs a manipulation to transmit the information, the terminal device **400** transmits the input information to the management device **600.** The management device **600** creates a work plan based on the information. The terminal device **400** may also be used to register one or more fields where the work vehicle **100** is to perform the agricultural work, the repository for the work vehicle **100,** and one or more waiting areas. The terminal device **400** may further have a function of displaying, on a display screen thereof, a setting screen allowing the user to input information necessary to set a target path.

Hereinafter, a configuration and an operation of the system according to the present embodiment will be described in more detail.

### [1. Configuration]

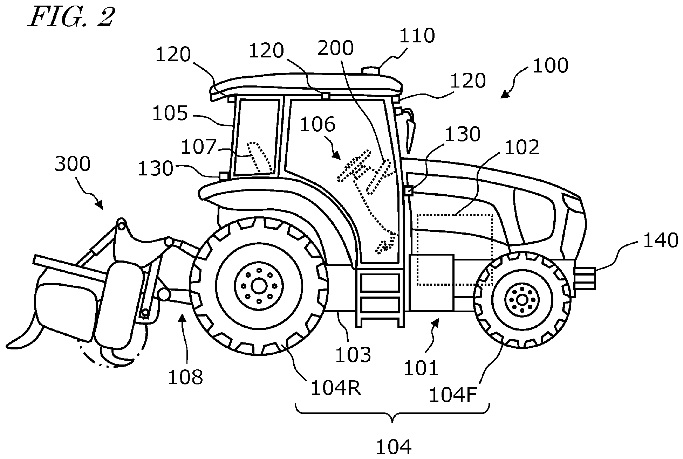

FIG. **2** is a side view schematically showing an example of the work vehicle **100** and an example of implement **300** linked to the work vehicle **100.** The work vehicle **100** according to the present embodiment can operate both in a manual driving mode and a self-driving mode. In the self-driving mode, the work vehicle **100** is able to perform unmanned travel. The work vehicle **100** can perform self-driving both inside a field and outside the field.

As shown in FIG. **2****,** the work vehicle **100** includes a vehicle body **101,** a prime mover (engine) **102,** and a transmission **103.** On the vehicle body **101,** wheels **104** with tires and a cabin **105** are provided. The wheels **104** include a pair of front wheels **104F** and a pair of rear wheels **104R.** Inside the cabin **105,** a driver's seat **107,** a steering device **106,** an operational terminal **200,** and switches for manipulation are provided. In the case where the work vehicle **100** performs tasked travel inside the field, the front wheels **104F** and/or the rear wheels **104R** may have crawlers, rather than tires, attached thereto.

The work vehicle **100** includes a plurality of sensing devices sensing the surroundings of the work vehicle **100.** In the example shown in FIG. **2****,** the sensing devices include a plurality of cameras **120,** a LiDAR sensor **140,** and a plurality of obstacle sensors **130.**

The cameras **120** may be provided at the front/rear/right/left of the work vehicle **100,** for example. The cameras **120** image the surrounding environment of the work vehicle **100** and generate image data. The images acquired by the cameras **120** may be transmitted to the terminal device **400,** which is responsible for remote monitoring. The images may be used to monitor the work vehicle **100** during unmanned driving. The cameras **120** may also be used to generate images to allow the work vehicle **100,** traveling on a road outside the field (an agricultural road or a general road), to recognize objects, obstacles, white lines, road signs, traffic signs or the like in the surroundings of the work vehicle **100.**

The LiDAR sensor **140** in the example shown in FIG. 2 is disposed on a bottom portion of a front surface of the vehicle body **101.** The LiDAR sensor **140** may be disposed at any other position. While the work vehicle **100** is traveling mainly outside the field, the LiDAR sensor **140** repeatedly outputs sensor data representing the distance and the direction between an object existing in the surrounding environment thereof and each of measurement points, or a two-dimensional or three-dimensional coordinate values of each of the measurement points. The sensor data output from the LiDAR sensor **140** is processed by the controller of the work vehicle **100.** The controller can perform localization of the work vehicle **100** by matching the sensor data against the environment map. The controller can further detect an object such as an obstacle existing in the surroundings of the work vehicle **100** based on the sensor data, and generate, along the global path, a local path along which the work vehicle **100** needs to actually proceed. The controller can utilize an algorithm such as, for example, SLAM (Simultaneous Localization and Mapping) to generate or edit an environment map. The work vehicle **100** may include a plurality of LiDAR sensors disposed at different positions with different orientations.

The plurality of obstacle sensors **130** shown in FIG. 2 are provided at the front and the rear of the cabin **105.** The obstacle sensors **130** may be disposed at other positions. For example, one or more obstacle sensors **130** may be disposed at any position at the sides, the front or the rear of the vehicle body **101.** The obstacle sensors **130** may include, for example, a laser scanner or an ultrasonic sonar. The obstacle sensors **130** may be used to detect obstacles in the surroundings of the work vehicle **100** during self-traveling to cause the work vehicle **100** to halt or detour around the obstacles. The LiDAR sensor **140** may be used as one of the obstacle sensors **130.**

The work vehicle **100** further includes a GNSS unit **110.** The GNSS unit **110** includes a GNSS receiver. The GNSS receiver may include an antenna to receive a signal(s) from a GNSS satellite (s) and a processor to calculate the position of the work vehicle **100** based on the signal (s) received by the antenna. The GNSS unit **110** receives satellite signals transmitted from the plurality of GNSS satellites, and performs positioning based on the satellite signals. GNSS is the general term for satellite positioning systems such as GPS (Global Positioning System), QZSS (Quasi-Zenith Satellite System; e.g., MICHIBIKI), GLONASS, Galileo, and BeiDou. Although the GNSS unit **110** according to the present embodiment is disposed above the cabin **105,** it may be disposed at any other position.

The GNSS unit **110** may include an inertial measurement unit (IMU). Signals from the IMU can be used to complement position data. The IMU can measure a tilt or a small motion of the work vehicle **100.** The data acquired by the IMU can be used to complement the position data based on the satellite signals, so as to improve the performance of positioning.

The controller of the work vehicle **100** may utilize, for positioning, the sensing data acquired by the sensing devices such as the cameras **120** or the LIDAR sensor **140,** in addition to the positioning results provided by the GNSS unit **110.** In the case where objects serving as characteristic points exist in the environment that is traveled by the work vehicle **100,** as in the case of an agricultural road, a forest road, a general road or an orchard, the position and the orientation of the work vehicle **100** can be estimated with a high accuracy based on data that is acquired by the cameras **120** or the LiDAR sensor **140** and on an environment map that is previously stored in the storage device. By correcting or complementing position data based on the satellite signals using the data acquired by the cameras **120** or the LiDAR sensor **140,** it becomes possible to identify the position of the work vehicle **100** with a higher accuracy.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position and/or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided frontward of the vehicle body **101.** In that case, the implement can be connected frontward of the work vehicle **100.**

Although the implement **300** shown in FIG. 2 is a rotary tiller, the implement **300** is not limited to a rotary tiller. For example, any arbitrary implement such as a seeder, a spreader, a transplanter, a mower, a rake implement, a baler, a harvester, a sprayer, or a harrow, can be connected to the work vehicle **100** for use.

The work vehicle **100** shown in FIG. 2 can be driven by human driving; alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** can travel via autonomous driving, or by remote manipulation by a user.

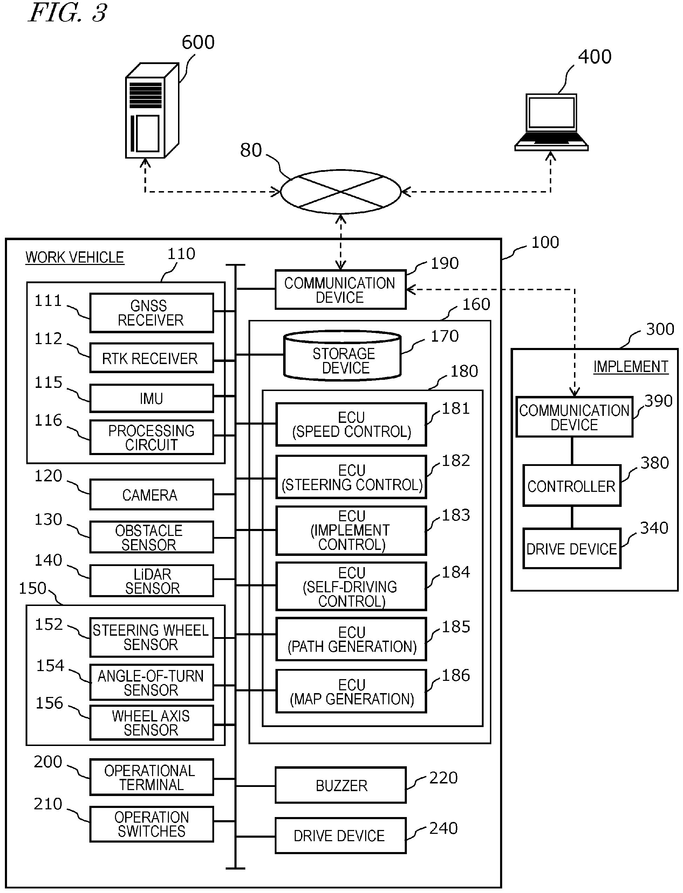

FIG. **3** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with the terminal device **400** and the management device **600** via the network **80.**

In addition to the GNSS unit **110,** the cameras **120,** the obstacle sensors **130,** the LiDAR sensor **140** and the operational terminal **200,** the work vehicle **100** in the example of FIG. **3** includes sensors **150** to detect the operating status of the work vehicle **100,** a control system **160,** a communication device **190,** operation switches **210,** a buzzer **220,** and a drive device **240.** These component elements are communicably connected to each other via a bus. The GNSS unit **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and a wheel axis sensor **156.** The control system **160** includes a storage device **170** and a controller **180.** The controller **180** includes a plurality of electronic control units (ECU) **181** to **186.** The implement **300** includes a drive device **340,** a controller **380,** and a communication device **390.** Note that FIG. **3** shows component elements which are relatively closely related to the operations of self-driving by the work vehicle **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the identification number, the angle of elevation, the angle of direction, and a value representing the reception strength of each of the satellites from which the satellite signals are received.

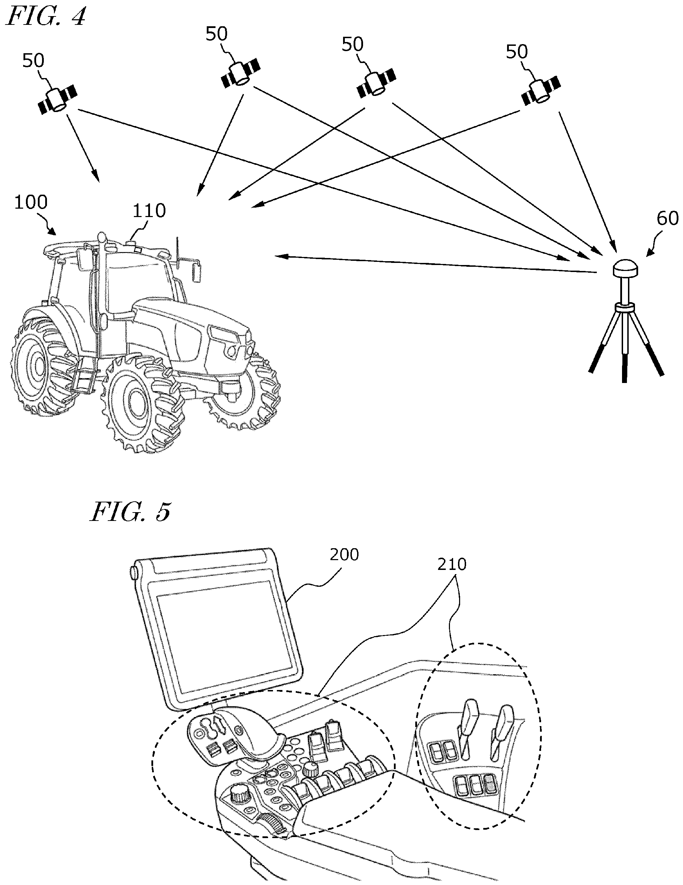

The GNSS unit **110** shown in FIG. **3** performs positioning of the work vehicle **100** by utilizing an RTK (Real Time Kinematic)-GNSS. FIG. **4** is a conceptual diagram showing an example of the work vehicle **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field where the work vehicle **100** performs tasked travel (e.g., at a position within 10 km of the work vehicle **100)** . The reference station **60** generates a correction signal of, for example, an RTCM format based on the satellite signals received from the plurality of GNSS satellites **50,** and transmits the correction signal to the GNSS unit **110.** The RTK receiver **112,** which includes an antenna and a modem, receives the correction signal transmitted from the reference station **60.** Based on the correction signal, the processing circuit **116** of the GNSS unit **110** corrects the results of the positioning performed by use of the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the work vehicle **100** as frequently as, for example, one to ten times per second.

Note that the positioning method is not limited to being performed by use of an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **60,** positional information may be generated without using the correction signal. In that case, the GNSS unit **110** does not need to include the RTK receiver **112.**

Even in the case where the RTK-GNSS is used, at a site where the correction signal from the reference station **60** cannot be acquired (e.g., on a road far from the field), the position of the work vehicle **100** is estimated by another method with no use of the signal from the RTK receiver **112.** For example, the position of the work vehicle **100** may be estimated by matching the data output from the LiDAR sensor **140** and/or the cameras **120** against a highly accurate environment map.

The GNSS unit **110** according to the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the surrounding environment of the work vehicle **100.** Each of the cameras **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image data (e.g., motion picture data). The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning and/or detection of obstacles. As shown in FIG. **2****,** the plurality of cameras **120** may be provided at different positions on the work vehicle **100,** or a single camera **120** may be provided. A visible camera(s) to generate visible light images and an infrared camera (s) to generate infrared images may be separately provided. Both of a visible camera(s) and an infrared camera(s) may be provided as cameras for generating images for monitoring purposes. The infrared camera (s) may also be used for detection of obstacles at nighttime.

The obstacle sensors **130** detect objects existing in the surroundings of the work vehicle **100.** Each of the obstacle sensors **130** may include a laser scanner or an ultrasonic sonar, for example. When an object exists at a position within a predetermined distance from one of the obstacle sensors **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles in the surroundings of the work vehicle **100.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** are used for steering control by the controller **180.**

The wheel axis sensor **156** measures the rotational speed, i.e., the number of revolutions per unit time, of a wheel axis that is connected to the wheels **104.** The wheel axis sensor **156** may be a sensor including a magnetoresistive element (MR), a Hall generator, or an electromagnetic pickup, for example. The wheel axis sensor **156** outputs a numerical value indicating the number of revolutions per minute (unit: rpm) of the wheel axis, for example. The wheel axis sensor **156** is used to measure the speed of the work vehicle **100.**

The drive device **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The buzzer **220** is an audio output device to present an alarm sound to alert the user of an abnormality. For example, the buzzer **220** may present an alarm sound when an obstacle is detected during self-driving. The buzzer **220** is controlled by the controller **180.**

The storage device **170** includes one or more storage mediums such as a flash memory or a magnetic disc. The storage device **170** stores various data that is generated by the GNSS unit **110,** the cameras **120,** the obstacle sensors **130,** the LiDAR sensor **140,** the sensors **150,** and the controller **180.** The data that is stored by the storage device **170** may include map data on the environment where the work vehicle **100** travels (environment map) and data on a global path (target path) for self-driving. The environment map includes information on a plurality of fields where the work vehicle **100** performs agricultural work and roads around the fields. The environment map and the target path may be generated by a processor in the management device **600.** The controller **180** according to the present embodiment has a function of generating or editing an environment map and a target path. The controller **180** can edit the environment map and the target path, acquired from the management device **160,** in accordance with the environment where the work vehicle **100** travels. The storage device **170** also stores data on a work plan received by the communication device **190** from the management device **600.** The work plan includes information on a plurality of tasks of agricultural work to be performed by the work vehicle **100** over a plurality of working days. The work plan may be, for example, data on a work schedule including information on the time when the work vehicle **100** is scheduled to perform each task of agricultural work on each of the working days. The storage device **170** also stores a computer program(s) to cause each of the ECUs in the controller **180** to perform various operations described below. Such a computer program (s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, the ECU **184** for self-driving control, the ECU **185** for path generation, and the ECU **186** for map generation.

The ECU **181** controls the prime mover **102,** the transmission **103** and brakes included in the drive device **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communication device **190** to the implement **300.**

Based on data output from the GNSS unit **110,** the cameras **120,** the obstacle sensors **130,** the LiDAR sensor **140** and the sensors **150,** the ECU **184** performs computation and control for achieving self-driving. For example, the ECU **184** specifies the position of the work vehicle **100** based on the data output from at least one of the GNSS unit **110,** the cameras **120** and the LiDAR sensor **140.** Inside the field, the ECU **184** may determine the position of the work vehicle **100** based only on the data output from the GNSS unit **110.** The ECU **184** may estimate or correct the position of the work vehicle **100** based on the data acquired by the cameras **120** or the LiDAR sensor **140.** Use of the data acquired by the cameras **120** or the LiDAR sensor **140** allows the accuracy of the positioning to be further improved. Outside the field, the ECU **184** estimates the position of the work vehicle **100** by use of the data output from the LiDAR sensor **140** or the cameras **120.** For example, the ECU **184** may estimate the position of the work vehicle **100** by matching the data output from the LiDAR sensor **140** or the cameras **120** against the environment map. During self-driving, the ECU **184** performs computation necessary for the work vehicle **100** to travel along a target path or a local path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103** or the brakes to change the speed of the work vehicle **100.** In response to the command to change the steering angle, the ECU **182** controls the steering device **106** to change the steering angle.

While the work vehicle **100** is traveling along the target path, the ECU **185** consecutively generates a local path along which the work vehicle **100** can avoid an obstacle. During travel of the work vehicle **100,** the ECU **185** recognizes an obstacle existing in the surroundings of the work vehicle **100** based on the data output from the cameras **120,** the obstacle sensors **130** and the LiDAR sensor **140.** The ECU **185** generates a local path such that the work vehicle **100** avoids the recognized obstacle. The ECU **185** may have a function of performing global path planning instead of the management device **160.** In this case, the ECU **185** determines a destination of the work vehicle **100** based on the work plan stored in the storage device **170,** and determines a target path from a beginning point to a target point of the movement of the work vehicle **100.** For example, the ECU **185** can generate, as the target path, a path by which the work vehicle **100** can arrive at the destination within the shortest time period, based on the environment map stored in the storage device **170** and including information on the roads.

The ECU **186** generates or edits a map of the environment where the work vehicle **100** travels. In the present embodiment, an environment map generated by an external device such as the management device **600** is transmitted to the work vehicle **100** and recorded in the storage device **170.** Instead, the ECU **186** can generate or edit an environment map. Hereinafter, an operation in a case where the ECU **186** generates an environment map will be described. An environment map may be generated based on sensor data output from the LiDAR sensor **140.** For generating an environment map, the ECU **186** consecutively generates three-dimensional point cloud data based on the sensor data output from the LiDAR sensor **140** while the work vehicle **100** is traveling. The ECU **186** can generate an environment map by connecting the point cloud data consecutively generated by use of an algorithm such as, for example, SLAM. The environment map generated in this manner is a highly accurate three-dimensional map, and may be used for localization performed by the ECU **184.** Based on this three-dimensional map, a two-dimensional map usable for the global path planning may be generated. In this specification, the three-dimensional map that is used for the localization and the two-dimensional map that is used for the global path planning will be both referred to as an "environment map". The ECU **186** can further edit the map by adding, to the map, various types of attribute information on a structural body, the state of the road surface, how easily the road is passable, or the like that is recognized based on the data output from the camera **120** or the LiDAR sensor **140.**

Through the actions of these ECUs, the controller **180** realizes self-driving. During self-driving, the controller **180** controls the drive device **240** based on the measured or estimated position of the work vehicle **100** and on the target path. As a result, the controller **180** can cause the work vehicle **100** to travel along the target path.

The plurality of ECUs included in the controller **180** can communicate with each other in accordance with a vehicle bus standard such as, for example, a CAN (Controller Area Network) . Instead of the CAN, faster communication methods such as Automotive Ethernet (registered trademark) may be used. Although the ECUs **181** to **186** are illustrated as individual blocks in FIG. 3, the function of each of the ECU **181** to **186** may be implemented by a plurality of ECUs. Alternatively, an onboard computer that integrates the functions of at least some of the ECUs **181** to **186** may be provided. The controller **180** may include ECUs other than the ECUs **181** to **186,** and any number of ECUs may be provided in accordance with functionality. Each ECU includes a processing circuit including one or more processors.

The communication device **190** is a device including a circuit communicating with the implement **300,** the terminal device **400** and the management device **600.** The communication device **190** includes circuitry to perform exchanges of signals complying with an ISOBUS standard such as ISOBUS-TIM, for example, between itself and the communication device **390** of the implement **300.** This allows the implement **300** to perform a desired operation, or allows information to be acquired from the implement **300.** The communication device **190** may further include an antenna and a communication circuit to exchange signals via the network **80** with communication devices of the terminal device **400** and the management device **600.** The network **80** may include a 3G, 4G, 5G, or any other cellular mobile communications network and the Internet, for example. The communication device **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform a manipulation related to the travel of the work vehicle **100** and the operation of the implement **300,** and is also referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, recording or editing an environment map, setting a target path, and switching ON/OFF the implement **300.** At least a portion of these manipulations may also be realized by manipulating the operation switches **210.** The operational terminal **200** may be configured so as to be detachable from the work vehicle **100.** A user who is at a remote place from the work vehicle **100** may manipulate the detached operational terminal **200** to control the operation of the work vehicle **100.** Instead of the operational terminal **200,** the user may manipulate a computer on which necessary application software is installed, for example, the terminal device **400,** to control the operation of the work vehicle **100.**

FIG. **5** is a diagram showing an example of the operational terminal **200** and an example of the operation switches **210** both provided in the cabin **105.** In the cabin **105,** the switches **210,** including a plurality of switches that are manipulable to the user, are disposed. The operation switches **210** may include, for example, a switch to select the gear shift as to a main gear shift or a range gear shift, a switch to switch between a self-driving mode and a manual driving mode, a switch to switch between forward travel and backward travel, a switch to raise or lower the implement **300,** and the like. In the case where the work vehicle **100** only performs unmanned driving and lacks human driving functionality, the work vehicle **100** does not need to include the operation switches **210.**

The drive device **340** in the implement **300** shown in FIG. **3** performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communication device **390,** the controller **380** causes the drive device **340** to perform various operations. Moreover, a signal that is in accordance with the state of the implement **300** can be transmitted from the communication device **390** to the work vehicle **100.**

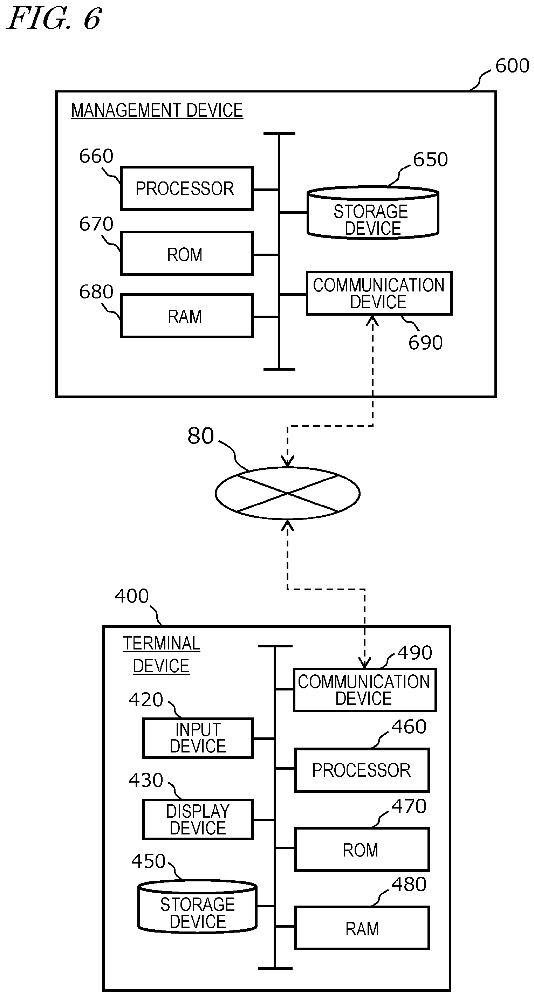

Now, a configuration of the management device **600** and the terminal device **400** will be described with reference to FIG. **6.** FIG. **6** is a block diagram showing an example of schematic hardware configuration of the management device **600** and the terminal device **400.**

The management device **600** includes a storage device **650,** a processor **660,** a ROM (Read Only Memory) **670,** a RAM (Random Access Memory) **680,** and a communication device **690.** These component elements are communicably connected to each other via a bus. The management device **600** may function as a cloud server to manage the schedule of the agricultural work to be performed by the work vehicle **100** in a field and support agriculture by use of the data managed by the management device **600** itself. The user can input information necessary to create a work plan by use of the terminal device **400** and upload the information to the management device **600** via the network **80.** The management device **600** can create a schedule of agricultural work, that is, a work plan based on the information. The management device **600** can further generate or edit an environment map and perform global path planning for the work vehicle **100.** The environment map may be distributed from a computer external to the management device **600.**

The communication device **690** is a communication module to communicate with the work vehicle **100** and the terminal device **400** via the network **80.** The communication device **690** can perform wired communication in compliance with communication standards such as, for example, IEEE1394 (registered trademark) or Ethernet (registered trademark). The communication device **690** may perform wireless communication in compliance with Bluetooth (registered trademark) or Wi-Fi, or cellular mobile communication based on 3G, 4G, 5G or any other cellular mobile communication standard.

The processor **660** may be, for example, a semiconductor integrated circuit including a central processing unit (CPU). The processor **660** may be realized by a microprocessor or a microcontroller. Alternatively, the processor **660** may be realized by an FPGA (Field Programmable Gate Array), a GPU (Graphics Processing Unit), an ASIC (Application Specific Integrated Circuit) or an ASSP (Application Specific Standard Product) each including a CPU, or a combination of two or more selected from these circuits. The processor **660** consecutively executes a computer program, describing commands to execute at least one process, stored in the ROM **670** and thus realizes a desired process.

The ROM **670** is, for example, a writable memory (e.g., PROM), a rewritable memory (e.g., flash memory) or a memory which can only be read from but cannot be written to. The ROM **670** stores a program to control operations of the processor **660.** The ROM **670** does not need to be a single storage medium, and may be an assembly of a plurality of storage mediums. A portion of the assembly of the plurality of storage memories may be a detachable memory.

The RAM **680** provides a work area in which the control program stored in the ROM **670** is once developed at the time of boot. The RAM **680** does not need to be a single storage medium, and may be an assembly of a plurality of storage mediums.

The storage device **650** mainly functions as a storage for a database. The storage device **650** may be, for example, a magnetic storage device or a semiconductor storage device. An example of the magnetic storage device is a hard disc drive (HDD) . An example of the semiconductor storage device is a solid state drive (SSD). The storage device **650** may be a device independent from the management device **600.** For example, the storage device **650** may be a storage device connected to the management device **600** via the network **80,** for example, a cloud storage.

The terminal device **400** includes an input device **420,** a display device **430,** a storage device **450,** a processor **460, a** ROM **470,** a RAM **480,** and a communication device **490.** These component elements are communicably connected to each other via a bus. The input device **420** is a device to convert an instruction from the user into data and input the data to a computer. The input device **420** may be, for example, a keyboard, a mouse or a touch panel. The display device **430** may be, for example, a liquid crystal display or an organic EL display. The processor **460,** the ROM **470,** the RAM **480,** the storage device **450** and the communication device **490** are substantially the same as the corresponding component elements described above regarding the example of the hardware configuration of the management device **600,** and will not be described in repetition.

### [2. Operation]

Now, an operation of the work vehicle **100,** the terminal device **400** and the management device **600** will be described.

### [2-1. Self-traveling operation]

First, an example operation of self-traveling of the work vehicle **100** will be described. The work vehicle **100** according to the present embodiment can automatically travel both inside and outside a field. Inside the field, the work vehicle **100** drives the implement **300** to perform predetermined agricultural work while traveling along a preset target path. When detecting an obstacle by the obstacle sensors **130** thereof while traveling inside the field, the work vehicle **100** halts traveling and performs operations of presenting an alarm sound from the buzzer **220,** transmitting an alert signal to the terminal device **400** and the like. Inside the field, the positioning of the work vehicle **100** is performed based mainly on data output from the GNSS unit **110.** Meanwhile, outside the field, the work vehicle **100** automatically travels along a target path set for an agricultural road or a general road outside the field. While traveling outside the field, the work vehicle **100** performs local path planning based on data acquired by the cameras **120** or the LiDAR **140.** When an obstacle is detected outside the field, the work vehicle **100** avoids the obstacle or halts at the point. Outside the field, the position of the work vehicle **100** is estimated based on data output from the LiDAR sensor **140** or the cameras **120** in addition to positioning data output from the GNSS unit **110.**

Hereinafter, an operation of the work vehicle **100** performing self-traveling inside the field will be described. An operation of the work vehicle **100** performing self-traveling outside the field and a process of global path planning and local path planning outside the field will be described later.

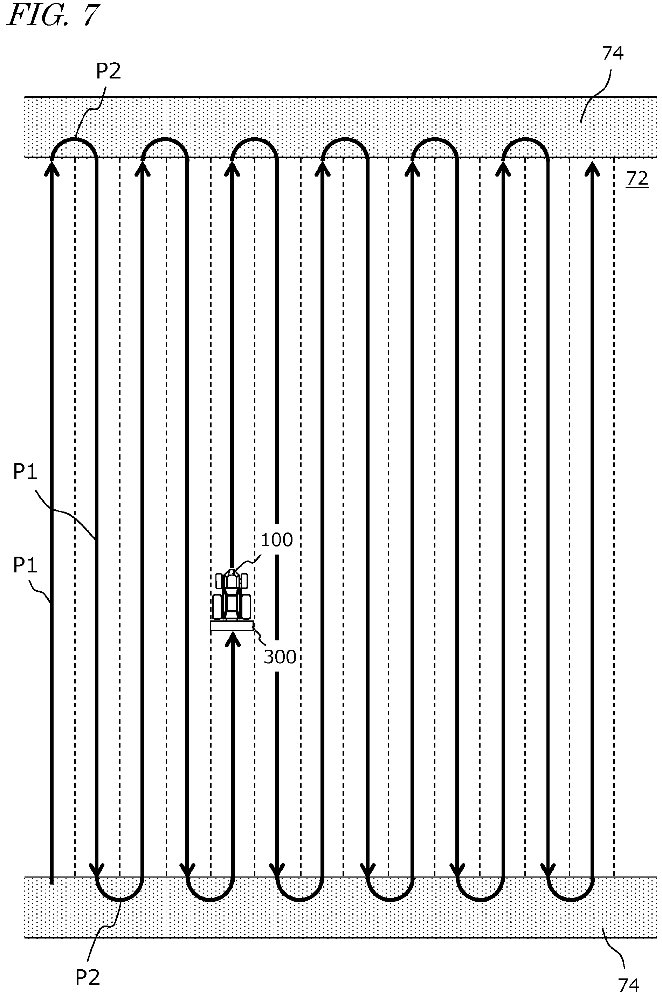

FIG. **7** is a diagram schematically showing an example of the work vehicle **100** automatically traveling along a target path in a field. In this example, the field includes a work area **72,** in which the work vehicle **100** performs work by using the implement **300,** and headlands **74,** which are located near outer edges of the field. The user may previously specify which regions of the field on the map would correspond to the work area **72** and the headlands **74.** The target path in this example includes a plurality of main paths **P1** parallel to each other and a plurality of turning paths **P2** interconnecting the plurality of main paths **P1.** The main paths **P1** are located in the work area **72,** whereas the turning paths **P2** are located in the headlands **74.** Although each of the main paths **P1** in FIG. 7 is illustrated as a linear path, each main path **P1** may also include a curved portion(s). Broken lines in FIG. **7** depict the working breadth of the implement **300.** The working breadth is previously set and recorded in the storage device **170.** The working breadth may be set and recorded by the user manipulating the operational terminal **200** or the terminal device **400.** Alternatively, the working breadth may be automatically recognized and recorded when the implement **300** is connected to the work vehicle **100.** The interval between the plurality of main paths **P1** may be set so as to be matched to the working breadth. The target path may be generated based on the manipulation made by the user, before self-driving is begun. The target path may be generated so as to cover the entire work area **72** in the field, for example. Along the target path shown in FIG. **7****,** the work vehicle **100** automatically travels while repeating a reciprocating motion from a beginning point of work to an ending point of work. Note that the target path shown in FIG. **7** is merely an example, and the target path may be arbitrarily determined.

Now, an example control by the controller **180** during self-driving inside the field will be described.

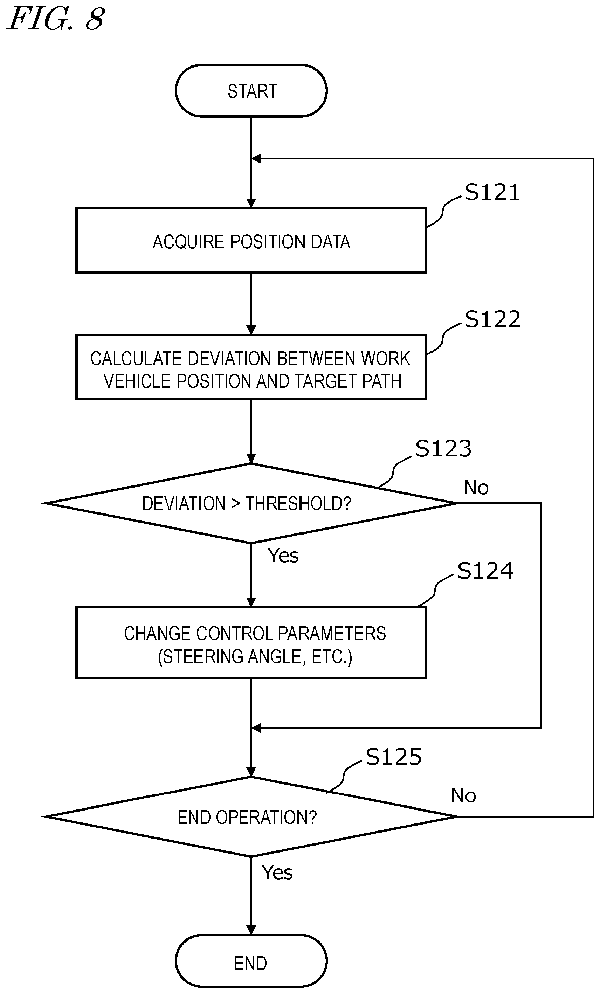

FIG. **8** is a flowchart showing an example operation of steering control to be performed by the controller **180** during self-driving. During travel of the work vehicle **100,** the controller **180** performs automatic steering by performing the operation from steps **S121** to **S125** shown in FIG. **8****.** The speed of the work vehicle **100** will be maintained at a previously-set speed, for example. First, during travel of the work vehicle **100,** the controller **180** acquires data representing the position of the work vehicle **100** that is generated by the GNSS unit **110** (step **S121**). Next, the controller **180** calculates a deviation between the position of the work vehicle **100** and the target path (step **S122)**. The deviation represents the distance between the position of the work vehicle **100** and the target path at that moment. The controller **180** determines whether the calculated deviation in position exceeds the previously-set threshold or not (step **S123)**. If the deviation exceeds the threshold, the controller **180** changes a control parameter of the steering device included in the drive device **240** so as to reduce the deviation, thus changing the steering angle (step **S124).** If the deviation does not exceed the threshold at step **S123,** the operation of step **S124** is omitted. At the following step **S125,** the controller **180** determines whether a command to end the operation has been received or not. The command to end the operation may be given when the user has instructed that self-driving be suspended through remote manipulations, or when the work vehicle **100** has arrived at the destination, for example. If the command to end the operation has not been given, the control returns to step **S121** and the controller **180** performs substantially the same operation based on a newly measured position of the work vehicle **100.** The controller **180** repeats the operation from steps **S121** to **S125** until a command to end the operation is given. The aforementioned operation is executed by the ECUs **182** and **184** in the controller **180.**

In the example shown in FIG. **8****,** the controller **180** controls the drive device **240** based only on the deviation between the position of the work vehicle **100** as identified by the GNSS unit **110** and the target path. Alternatively, a deviation in terms of directions may further be considered in the control. For example, when a directional deviation exceeds a previously-set threshold, where the directional deviation is an angle difference between the orientation of the work vehicle **100** as identified by the GNSS unit **110** and the direction of the target path, the controller **180** may change the control parameter of the steering device of the drive device **240** (e.g., steering angle) in accordance with the deviation.

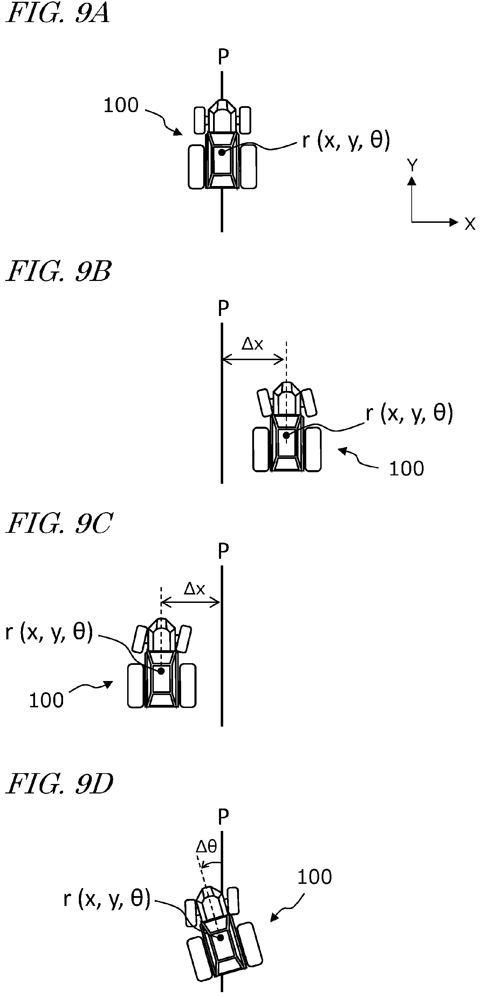

Hereinafter, with reference to FIGS. **9A** to **9D****,** an example of steering control by the controller **180** will be described more specifically.

FIG. **9A** is a diagram showing an example of the work vehicle **100** traveling along a target path **P**. FIG. **9B** is a diagram showing an example of the work vehicle **100** at a position which is shifted rightward from the target path **P**. FIG. **9C** is a diagram showing an example of the work vehicle **100** at a position which is shifted leftward from the target path **P**. FIG. **9D** is a diagram showing an example of the work vehicle **100** oriented in an inclined direction with respect to the target path **P.** In these figures, the pose, i.e., the position and orientation, of the work vehicle **100** as measured by the GNSS unit **110** is expressed as r(x,y,θ). Herein, (x,y) are coordinates representing the position of a reference point on the work vehicle **100** in an XY coordinate system, which is a two-dimensional coordinate system fixed to the globe. In the examples shown in FIGS. **9A** to **9D****,** the reference point on the work vehicle **100** is at a position, on the cabin, where a GNSS antenna is disposed, but the reference point may be at any arbitrary position. θ is an angle representing the measured orientation of the work vehicle **100.** Although the target path **P** is shown parallel to the Y axis in the examples illustrated in these figures, the target path **P** may not necessarily be parallel to the Y axis, in general.

As shown in FIG. **9A****,** in the case where the position and orientation of the work vehicle **100** are not deviated from the target path **P,** the controller **180** maintains the steering angle and speed of the work vehicle **100** without changing them.

As shown in FIG. **9B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P**. At this point, not only the steering angle but also the speed may be changed. The magnitude of the steering angle may be adjusted in accordance with the magnitude of a positional deviation Δx, for example.

As shown in FIG. **9C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P**. In this case, too, not only the steering angle but also the speed may be changed. The amount of change of the steering angle may be adjusted in accordance with the magnitude of the positional deviation Δx, for example.

As shown in FIG. **9D****,** in the case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by one or more obstacle sensors **130** during travel, the controller **180** halts the work vehicle **100.** At this point, the controller **180** may cause the buzzer **220** to present an alarm sound or may transmit an alert signal to the terminal device **400.** In the case where the obstacle is avoidable, the controller **180** may control the drive device **240** such that the obstacle is avoided.

The work vehicle **100** according to the present embodiment can perform self-traveling outside a field as well as inside the field. Outside the field, the controller **180** is able to detect an object located at a relatively distant position from the work vehicle **100** (e.g., another vehicle, a pedestrian, etc.) based on data output from the cameras **120** or the LiDAR sensor **140.** The controller **180** generates a local path such that the local path avoids the detected object, and performs speed control and steering control along the local path. In this manner, self-traveling on a road outside the field can be realized.

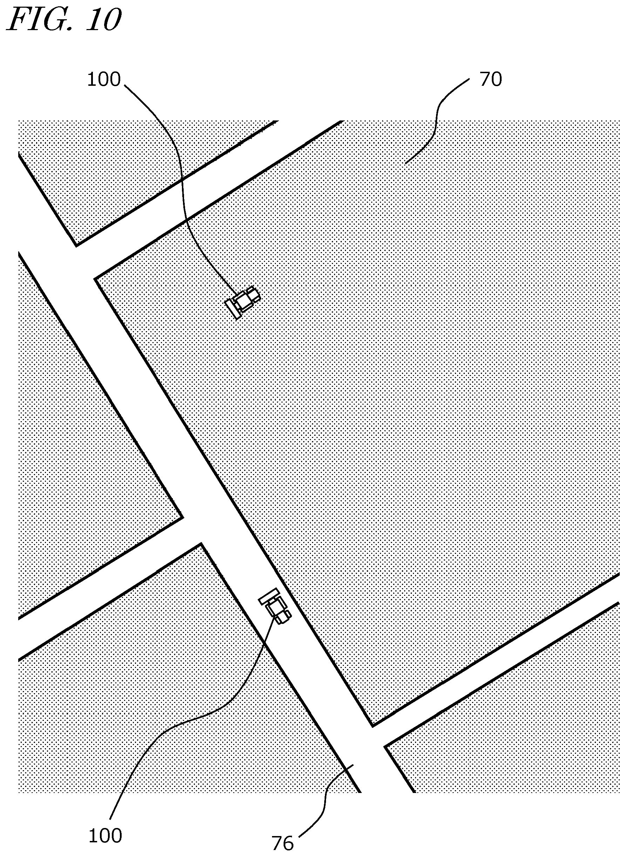

As described above, the work vehicle **100** according to the present embodiment can automatically travel inside the field and outside the field in an unmanned manner. FIG. **10** is a diagram schematically showing an example of state where a plurality of the work vehicles **100** are performing self-traveling inside a field **70** and on a road **76** outside the field **70.** In the storage device **170,** an environment map of a region including a plurality of fields and roads around the fields, and a target path, are recorded. The environment map and the target path may be generated by the management device **600** or the ECU **185.** In the case of traveling on a road, the work vehicle **100** travels along the target path while sensing the surroundings thereof by use of the sensing devices such as the cameras **120** and the LiDAR sensor **140,** with the implement **300** being raised. During travel, the controller **180** consecutively generates a local path and causes the work vehicle **100** to travel along the local path. This allows the work vehicle **100** to perform self-traveling while avoiding obstacles. During travel, the target path may be changed in accordance with the state.

### [2-2. Creation of a work plan]

The work vehicle **100** according to the present embodiment automatically moves between the fields and performs agricultural work in each of the fields in accordance with a work plan created by the management device **600.** The work plan includes information on one or more tasks of agricultural work to be performed by the work vehicle **100.** For example, the work plan includes information on one or more tasks of agricultural work to be performed by the work vehicle **100** and on the field where each task is to be performed. The work plan may include information on a plurality of tasks of agricultural work to be performed by the work vehicle **100** over a plurality of working days and on the field where each task of agricultural work is to be performed. More specifically, the work plan may be a database including information on a work schedule indicating which agricultural machine is to perform which task of agricultural work in which field at which point of time for each working day. Hereinafter, an example case where the work plan is data of such a work schedule will be described. The work plan may be created by the processor **660** of the management device **600** based on information input by the user to the terminal device **400.** Hereinafter, an example of method for creating the work schedule will be described.

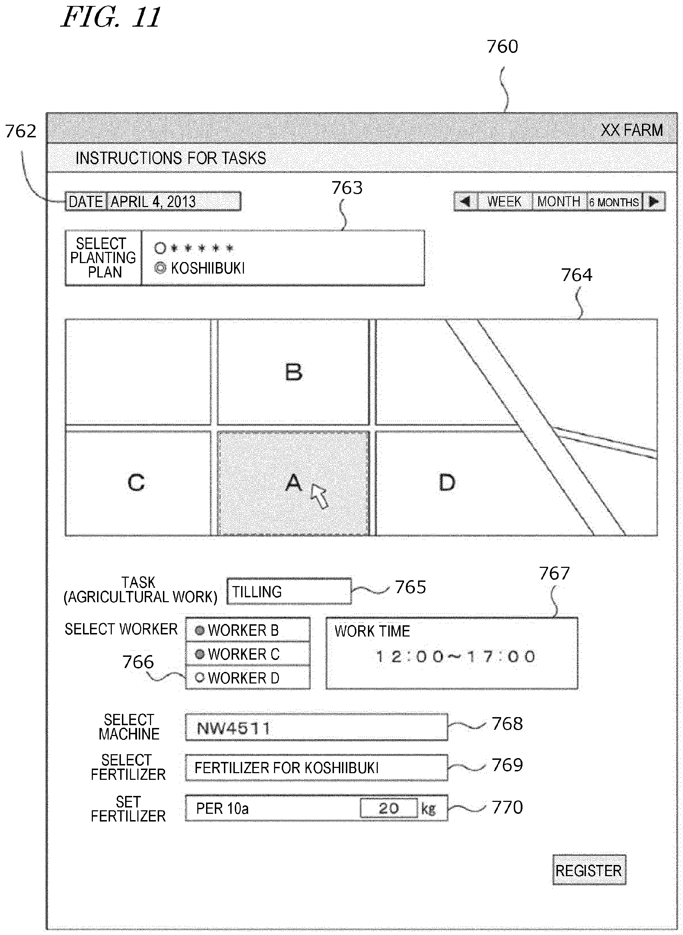

FIG. **11** is a diagram showing an example of setting screen **760** displayed on the display device **430** of the terminal device **400.** In response to a manipulation performed by the user by use of the input device **420,** the processor **460** of the terminal device **400** activates application software for schedule creation to cause the display device **430** to display the setting screen **760** as shown in FIG. **11****.** The user can input information necessary to create a work schedule on the setting screen **760.**

FIG. **11** shows an example of the setting screen **760** in the case where tilling accompanied by spraying of a fertilizer is to be performed as the agricultural work in a field for rice farming. The setting screen **760** is not limited to the one shown in the figure, and may be changed when necessary. The setting screen **760** in the example of FIG. **11** includes a date setter **762,** a planting plan selector **763,** a field selector **764,** a work selector **765,** a worker selector **766,** a time setter **767,** a machine selector **768,** a fertilizer selector **769,** and a spray amount setter **770.**

The date setter **762** displays a date input by the input device **420.** The input date is set as the day when the agricultural work is to be performed.

The planting plan selector **763** displays a list of names of planting plans created previously. The user can select a desired planting plan from the list. The planting plan is created previously for each of types or each of breeds of the crop, and is recorded in the storage device **650** of the management device **600.** The planting plan is a plan regarding which crop is to be planted (seeded) in which field. The planting plan is created by, for example, a manager managing a plurality of fields before the crop is planted in one of the fields. In the example of FIG. **11****,** a planting plan for rice breed "KOSHIIBUKI" is selected. In this case, the contents set by the setting screen **760** are associated with the planting plan of "KOSHIIBUKI".

The field selector **764** displays the fields in the map. The user can select any field from the fields displayed. In the example of FIG. **11****,** an area indicating "field A" is selected. In this case, the selected "field A" is set as the field where the agricultural work is to be performed.

The work selector **765** displays a plurality of types of agricultural work necessary to grow the selected crop. The user can select one type of agricultural work from the plurality of types of agricultural work. In the example of FIG. **11****,** "tilling" is selected from the plurality of types of agricultural work. In this case, the selected "tilling" is set as the agricultural work to be performed.

The worker selector **766** displays workers registered previously. The user can select one or more workers from the plurality of workers displayed. In the example of FIG. **11****,** "worker B" and "worker C" are selected from the plurality of workers. In this case the "worker B" and the "worker C" selected are set as the workers in charge of performing or managing the agricultural work. In the present embodiment, the agricultural machine performs agricultural work automatically. Therefore, the workers do not need to actually perform the agricultural work, and may merely remotely monitor the agricultural work performed by the agricultural machine.

The time setter **767** displays a work time period input by the input device **420.** The work time period is specified by a point of time to begin the agricultural work and a point of time to end the agricultural work. The input work time period is set as the time period in which the agricultural work is scheduled to be performed.

The machine selector **768** is used to set the agricultural machine to be used for the agricultural work. The machine selector **768** may display, for example, the types or models of the agricultural machines previously registered by the management device **600** and the types, models, etc. of usable implements. The user can select a specific machine from the machines displayed. In the example of FIG. **11****,** the implement of model "NW4511" is selected. In this case, this implement is set as the machine to be used for the agricultural work.

The fertilizer selector **769** displays names of a plurality of fertilizers registered by the management device **600** previously. The user can select a specific fertilizer from the plurality of fertilizers displayed. The selected fertilizer is set as the fertilizer to be used for the agricultural work.

The spray amount setter **770** displays a numerical value input by the input device **420.** The input numerical value is set as the spray amount.

When the planting plan, the field, the agricultural work, the worker, the work time period, the fertilizer and the spray amount are input to the setting screen **760** and "register" is selected, the communication device **490** of the terminal device **400** transmits the input information to the management device **600.** The processor **660** of the management device **600** causes the storage device **650** to store the received information. Based on the received information, the processor **660** creates a schedule of the agricultural work to be performed by each agricultural machine and causes the storage device **650** to store the schedule.

Note that the information on the agricultural work to be managed by the managing device **600** is not limited to the above-described information. For example, the type and the spray amount of the agricultural chemical to be used in the field may be set by the setting screen **760.** Information on agricultural work other than the types of agricultural work shown in FIG. **11** may be set by the setting screen **760.**

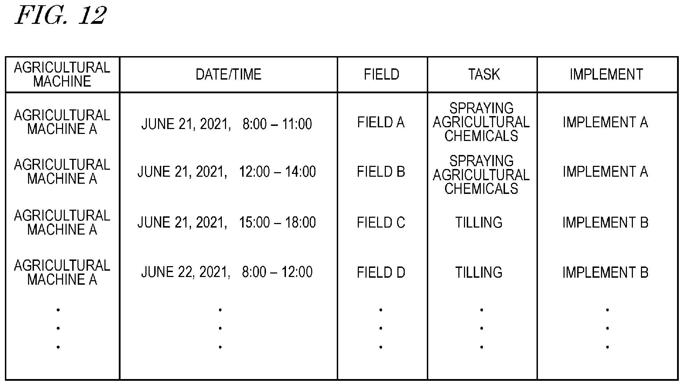

FIG. **12** is a table showing an example of schedule of agricultural work created by the management device **600.** The schedule in this example includes information representing the date and time of the agricultural work, the field for the agricultural work, the contents of the work, and the implement to be used, for each of the registered agricultural machines. The schedule may include, in addition to the information shown in FIG. **12****,** other information in accordance with the contents of work, for example, information on the types of agricultural chemicals or the spray amounts of the agricultural chemicals,. The processor **660** of the management device **600** instructs the work vehicle **100** to perform the agricultural work in accordance with such a schedule. The schedule may be downloaded by the controller **180** of the work vehicle **100** and may also stored in the storage device **170.** In this case, the controller **180** may spontaneously begin the operation in accordance with the schedule stored in the storage device **170.**

In the present embodiment, the work plan is created by the management device **600.** The work plan may be created by another device. For example, the processor **460** of the terminal device **400** or the controller **180** of the work vehicle **100** may have a function of creating or updating the work plan.

### [2-3. Path planning]

Now, an operation of path planning according to the present embodiment will be described in more detail.

The management device **600** and the control system **160** of the work vehicle **100** according to the present embodiment cooperate with each other to function as a path planning system for the work vehicle **100.** The storage device **650** stores a map including a plurality of fields and roads around the fields. The processor **660** of the management device **600** functions as a processing unit that generates a path for the work vehicle **100** on the map. The management device **600** generates a path for the work vehicle **100** based on a work plan. Note that a portion of, or the entirety of, a path generation process, which is to be performed by the management device **600,** may be performed by the ECU **185** of the controller **180** of the work vehicle **100.** In this case, a combination of the ECU **185** and the management device **600** functions as a processing unit that generates a path for the work vehicle **100.** Such a processing unit creates a work plan for the work vehicle **100,** and generates a path for the work vehicle **100** on the map based on the work plan.

Alternatively, a portion of, or the entirety of, the path generation process, which is to be performed by the management device **600,** may be performed by the operational terminal **200** of the work vehicle **100.** In this case, a combination of the operational terminal **200** and the management device **600** functions as a processing unit that generates a path for the work vehicle **100.** Such a processing unit creates a work plan for the work vehicle **100,** and generates a path for the work vehicle **100** on the map based on the work plan.

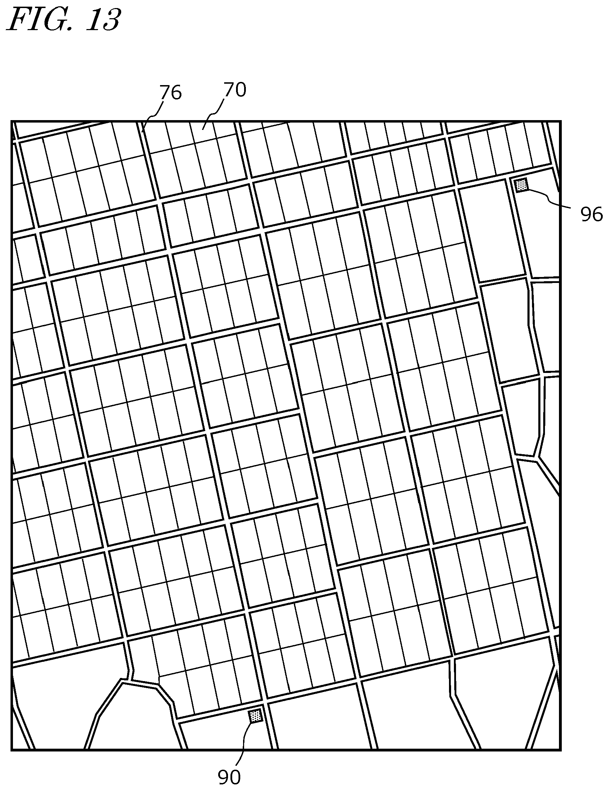

FIG. **13** is a diagram showing an example of map that is referred to at the time of path planning. This map is a two-dimensional digital map, and may be created or updated by the management device **600** or the ECU **185.** The map shown in FIG. **13** includes information on the position of each of points (e.g., the latitude and the longitude of each of the points) in a plurality of fields **70** where the work vehicle **100** is to perform agricultural work and roads **76** around the fields **70.** This map further includes positional information on a repository **90** for the work vehicle **100** and on a waiting area **96,** where the work vehicle **100** is to wait temporarily. The repository **90** and the waiting area **96** may be registered by a manipulation performed by the user by use of the terminal device **400.** The map as shown in FIG. **13** may be created for the entirety of a region where the work vehicle **100** may travel. Note that the map shown in FIG. **13** is a two-dimensional map, but a three-dimensional map may be used for the path planning.

The repository **90** may be, for example, a garage, a barn or a parking area adjacent to a house or an office of the user. The waiting area **96** may be, for example, a site that is managed or used jointly by a plurality of users. The waiting area **96** may be a facility such as a parking area or a garage managed or run by a regional government of a city, a town or a village, an agricultural cooperative or a corporation. In the case where the waiting area **96** is a facility locked at nighttime, the work vehicle **100** in the waiting area **96** can be prevented from being robbed. FIG. **13** shows one waiting area **96** as an example, but a plurality of waiting areas **96** is provided. In the case where the work vehicle **100** moves around within a relatively small range, there is no need to provide the waiting area **96** separately from the repository **90.**

Before the agricultural work begins on each of working days, the management device **600** reads, from the storage device **650,** a map of a region including the field(s) where the agricultural work is to be scheduled on that working day, and generates a path for the work vehicle **100** based on the map. More specifically, the management device **600** generates a first path, along which the work vehicle **100** is to travel while performing the agricultural work inside a field **70** (the first path is also referred to as a "tasked travel path"), on the field on the map, and generates a second path, along which the work vehicle **100** is to travel toward the field **70,** on a road on the map. After generating the first path and the second path, the management device **600** connects the first path and the second path to each other to generate a global path for the work vehicle **100.**

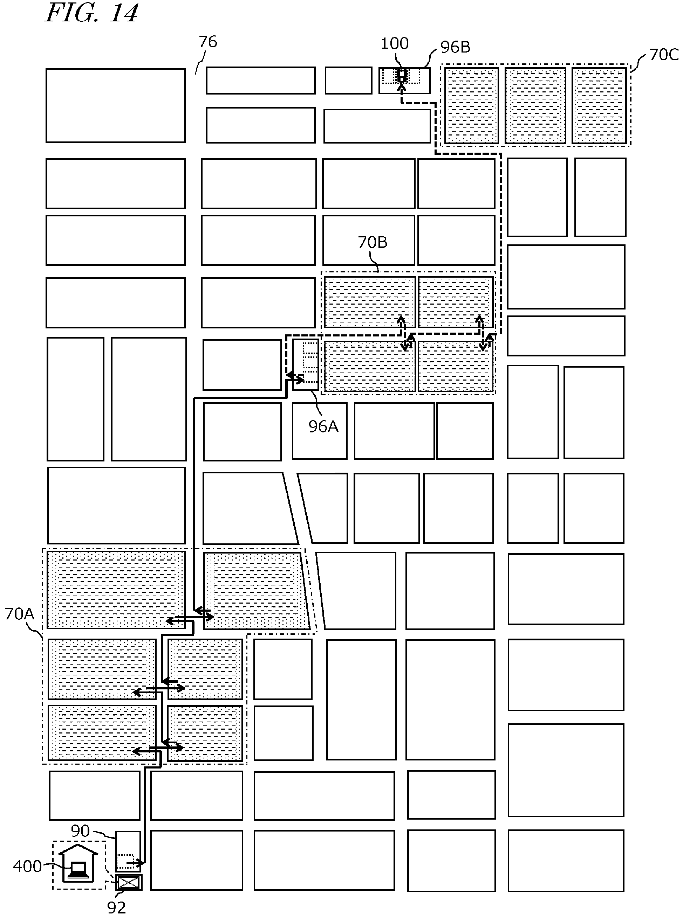

FIG. **14** is a diagram showing an example of global path to be generated. FIG. **14** shows, as an example, a field group **70A,** where the agricultural work is to be performed on one working day, a field group **70B,** where the agricultural work is to be performed on the next day, and a field group **70C,** where the agricultural work is to be performed on the day after the next day. FIG. **14** also shows, as an example, the repository **90** for the work vehicle **100,** a house **92** of the user performing remote monitoring of the work vehicle **100,** and two waiting areas **96A** and **96B,** where the work vehicle **100** is to wait. In FIG. **14****,** the field group **70A,** the field group **70B,** the field group **70C,** the repository **90,** the waiting area **96A** and the waiting area **96B** are shown as being relatively close to each other for the sake of convenience. In actuality, the distances between the field group **70A,** the field group **70B,** the field group **70C,** the repository **90,** the waiting area **96A** and the waiting area **96B** may be long, for example, 500 m to 1 km or even longer.

In FIG. **14****,** paths, of the global path generated by the management device **600,** which are generated on the roads **76** are represented by arrows. The first paths (i.e., tasked travel paths) generated inside the fields are omitted. Solid line arrows represent an example of paths for the work vehicle **100** on one working day, and broken line arrows represent an example of paths for the work vehicle **100** on the next working day.

In the example shown in FIG. **14****,** the management device **600** generates, as a path for one working day, a path along which the work vehicle **100** departs from the repository **90,** sequentially passes the fields in the field group **70A** and reaches the waiting area **96A.** This is because the waiting area **96A** is the waiting area closest to the field group **70B,** where the agricultural work is scheduled to be performed on the next working day. The management device **600** generates, as a path for the next working day, a path along which the work vehicle **100** departs from the waiting area **96A,** sequentially passes the fields in the field group **70B** and reaches the waiting area **96B.** This is because the waiting area **96B** is the waiting area closest to the field group **70C,** where the agricultural work is scheduled to be performed on the day after the next working day. In this manner, the management device **600** generates a path from the field where the final task of agricultural work is to be performed on each working day, to the waiting area located at the shortest average distance from the group of fields where the agricultural work is to be performed on the next working day. The work vehicle **100** travels along the generated path.

In the example shown in FIG. **14****,** on one working day, the work vehicle **100** departs from the repository **90,** and sequentially visits the fields in the field group **70A,** where the agricultural work is scheduled to be performed on the day, and performs the agricultural work indicated by the schedule in each field. In each field, the work vehicle **100** performs the agricultural work while performing self-traveling along the tasked travel path by, for example, the method described above with reference to FIG. **7** to FIG. **9D****.** When the agricultural work ends in one field, the work vehicle **100** enters the next field, and performs the agricultural work in substantially the same manner. The work vehicle **100** operates in this manner, and when the agricultural work ends in the field assigned to the final task of agricultural work for the day, the work vehicle **100** moves to the waiting area **96A.** The work vehicle **100** waits at the waiting area **96A** until the next working day. On the next working day, the work vehicle **100** departs from the waiting area **96A** and sequentially visits the fields in the field group **70B,** where the agricultural work is scheduled to be performed on the day, and performs the agricultural work indicated by the schedule in each field. When the agricultural work ends in the field assigned to the final task of agricultural work for the day, the work vehicle **100** moves to the waiting area **96B.** The work vehicle **100** waits at the waiting area **96B** until the day after the next working day. On the day after the next working day, the work vehicle **100** departs from the waiting area **96B,** sequentially performs the agricultural work in the fields in the field group **70C,** and then moves to a predetermined waiting area in substantially the same manner. With such an operation, the work vehicle **100** is moved efficiently along an optimal path in accordance with the schedule, so that the scheduled agricultural work can be completed.

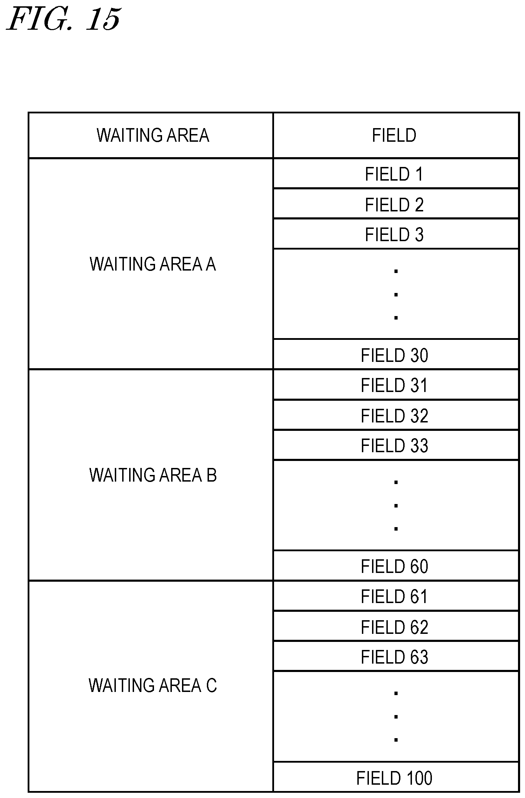

For a plurality of waiting areas (including the repository **90)** provided in the environment where the work vehicle **100** travels as in the present embodiment, data indicating the correspondence between the plurality of waiting areas and the plurality of fields (with a table) previously recorded in the storage device **650,** FIG. **15** shows an example of the correspondence between the waiting areas and the fields. The correspondence between the waiting areas and the fields may be determined based on, for example, a moving distance from each of the waiting areas to each of the fields. In the example shown in FIG. **15****,** the waiting area closest to the fields 1 to 30 is the waiting area A, the waiting area closest to the fields 31 to 60 is the waiting area B, and the waiting area closest to the fields 61 to 100 is the waiting area C. Referring to such a table, the management device **600** can determine the waiting area closest to the field where the agricultural work is scheduled to be performed on the next working day. One or more waiting areas **96** are provided in addition to the repository **90** as in this example, so that the time and the amount of consumption of the fuel required to move the work vehicle **100** can be decreased as compared with in the case where the work vehicle **100** returns to the repository **90** each day. As a result, a series of tasks of agricultural work over a plurality of working days can be performed more efficiently.

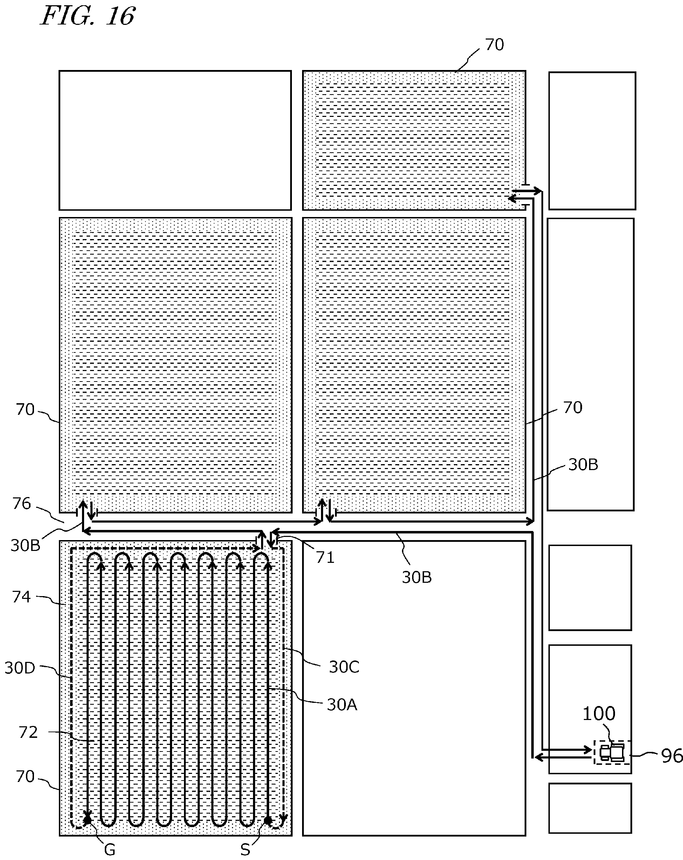

Now, with reference to FIG. **16****,** an example of method for generating a global path will be described in more detail. FIG. **16** is a diagram showing an example of global path generated on one working day. In this example, the management device **600** generates a path along which the work vehicle **100** departs from the waiting area **96,** passes four fields **70,** and returns to the waiting area **96.** The management device **600** generates a first path (tasked travel path) **30A** inside each of the fields **70,** and generates second paths **30B** on the roads **76** around the fields **70.** In FIG. **16****,** the first path **30A** is shown only inside the left bottom field **70,** and the first paths inside the other fields **70** are omitted.

The management device **600** generates the first path **30A** as represented by the solid line arrows in FIG. **16****,** inside each of the fields **70** on the map. The management device **600** generates the first path **30A** based on the settings previously made by the user as described above with reference to FIG. **7****.** The first path **30A** may be generated so as to cover the entirety of the work area **72** by repeating a reciprocating motion from a beginning point **S** to an ending point **G.** The interval between rows of the first path **30A** may be determined in consideration of the width and the turning performance of each of the work vehicle **100** and the implement **300.**

The management device **600** further generates a path from the waiting area **96** to each of the fields **70** and paths connecting such a plurality of fields **70** as second paths **30B.** In the example shown in FIG. **16****,** the management device **600** generates a second path **30B** at an entrance of each field **70** in addition to the second paths **30B** on the roads **76,** and generates a third path **30C** connecting the second path **30B** generated at each entrance and the beginning point **S** of the corresponding first path **30A** to each other. The management device **600** further generates a second path **30B** at an exit of each field **70** in addition to the second paths **30B** on the roads **76,** and generates a fourth path **30D** connecting the second path **30B** generated at each exit and the ending point **G** of the corresponding first path **30A** to each other. In the example shown in FIG. **16****,** the entrance and the exit of each field **70** are common to each other, and will be expressed as an "entrance/exit **71",** hereinafter. Each field **70** may have a plurality of entrances/exits **71,** or the entrance and the exit may be provided at different positions. The environment map includes positional information on the entrance/exit **71** (or the entrance and the exit) of each field **70** in addition to the positional information on each field **70.** The management device **600** can generate the second paths **30B** based on the positional information on the entrance/exit **71** .

The management device **600** according to the present embodiment generates the third path **30C** and the fourth path **30D** in a region other than a region, of the field **70,** where the agricultural work has been performed. In the example of FIG. **16****,** it is assumed that a previous task of agricultural work has already been performed in the work area **72.** Therefore, the management device **600** generates the third path **30C** and the fourth path **30D** in the headland **74** while avoiding the work area **72.** This can prevent the work area **72,** where the agricultural work has already been performed, from being trampled by the work vehicle **100.** In the case where no agricultural work has been performed in the field **70** in this season (that is, in the case where the current task of agricultural work is the first task in this season), the third path **30C** may overlap the work area **72.** Meanwhile, the fourth path **30D** is a path that is set after the current task of agricultural work is completed, and therefore is set so as not to overlap the work area **72.**

In the word area **72,** a plurality of types of agricultural work are performed at different times. For example, agricultural work such as tilling, planting, manure spreading, preventive pest control, and harvesting may be performed at different times. In the case where a certain type of agricultural work has already been performed in the work area **72,** if the work vehicle **100** tramples the work area **72,** the effect of the agricultural work already performed is spoiled. Therefore, in the case where a certain type of agricultural work has already been performed in the work area **72,** the management device **600** according to the present embodiment avoids the work area **72** to generate the third path **30C** and the fourth path **30D.** In which region the agricultural work has already been performed can be determined based on the work plan. The management device **600** can generate the third path **30C** and the fourth path **30D** in a region other than the region where the agricultural work has already been performed, based on the work plan.

The management device **600** can perform the above-described path generation process for each of the fields **70** and each of the roads **76** around the fields **70** to generate all the paths for a predetermined time period (e.g., half a day, one day, three days, etc.). For example, before the work vehicle **100** begins traveling on each working day, the management device **600** may generate all the paths necessary to complete all the tasks of agricultural work scheduled for that working day. Alternatively, the management device **600** may first generate a path necessary to perform a portion of the agricultural work scheduled for each working day, and then, after the portion of the agricultural work ends, may generate a path necessary to perform the remaining portion of the agricultural work for that working day. Still alternatively, the management device **600** may generate, all at once, all the paths necessary to complete all the tasks of agricultural work scheduled over a plurality of working days. The management device **600** may change the path, once generated, in accordance with various states such as the state of progress of the agricultural work, the state of weather, the traffic state, or the state of the agricultural road.

As described above, the management device **600** generates the first path **30A** inside the field **70** and the second paths **30B** outside the field **70** separately, and then connects the first path **30A** and the second paths **30B** to each other. The management device **600** can operate in an in-field path generation mode of generating the first path **30A** inside the field and in an out-of-field path generation mode of generating each of the second paths **30B** outside the field. In the in-field path generation mode, the management device **600** generates the first path **30A** in accordance with a first path generation algorithm. By contrast, in the out-of-field path generation mode, the management device **600** generates each of the second paths **30B** in accordance with a second path generation algorithm different from the first path generation algorithm. After generating the first path **30A** and the second paths **30B,** the management device **600** generates the third path **30C** and the fourth path **30D** connecting the first path **30A** and the second paths **30B** to each other. Thus, the global path planning is completed.

In the in-field path generation mode, the management device **600** generates the first path **30A** based on information on the registered field **70.** The management device **600** can generate the first path **30A** based on, for example, information on the outer shape and the area size of the registered field **70,** and information on the ranges, etc. of the work area **72** and the headland **74** that are set by the user. The first path **30A** may be generated for each of the fields **70** before, for example, the self-driving of the work vehicle **100** begins.

Meanwhile, in the out-of-field path generation mode, the management device **600** generates each second path **30B,** for example, in accordance with the second path generation algorithm for each of predetermined time periods (e.g., for each working day) based on the work plan. The management device **600** can generate the second path **30B** in accordance with the second path generation algorithm based on a search algorithm such as, for example, the Dijkstra's algorithm or the A* search algorithm. The management device **600** generates the second path **30B** automatically at a predetermined timing based on the work plan. The management device **600** may determine the second path **30B** in accordance with the state of the roads **76** (e.g., agricultural road) leading to the field **70.** In the case where, for example, trees grow thick along the road leading to the field **70** and may possibly prevent receipt of radio waves from a GNSS satellite, the management device **600** may exclude such a road to generate the second path **30B.**

As described above, the management device **600** sets the first path **30A** inside the field and the second path **30B** along the road **76** outside the field by different methods (e.g., different setting screens, different devices or different types of application software). Also in the case where a portion of, or the entirety of, the path generation process, which is to be performed by the management device **600,** is performed by another device (e.g., the operational terminal **200,** the terminal device **400** or the ECU **185),** the first path **30A** inside the field and the second path **30B** along the road **76** outside the field are set by different methods in substantially the same manner. In the case where, for example, a combination of the operational terminal **200** and the management device **600** functions as the processing unit that generates the path for the work vehicle **100,** the operational terminal **200** may generate the first path **30A** in accordance with the user's instructions whereas the management device **600** generates the second path **30B** based on the work plan.

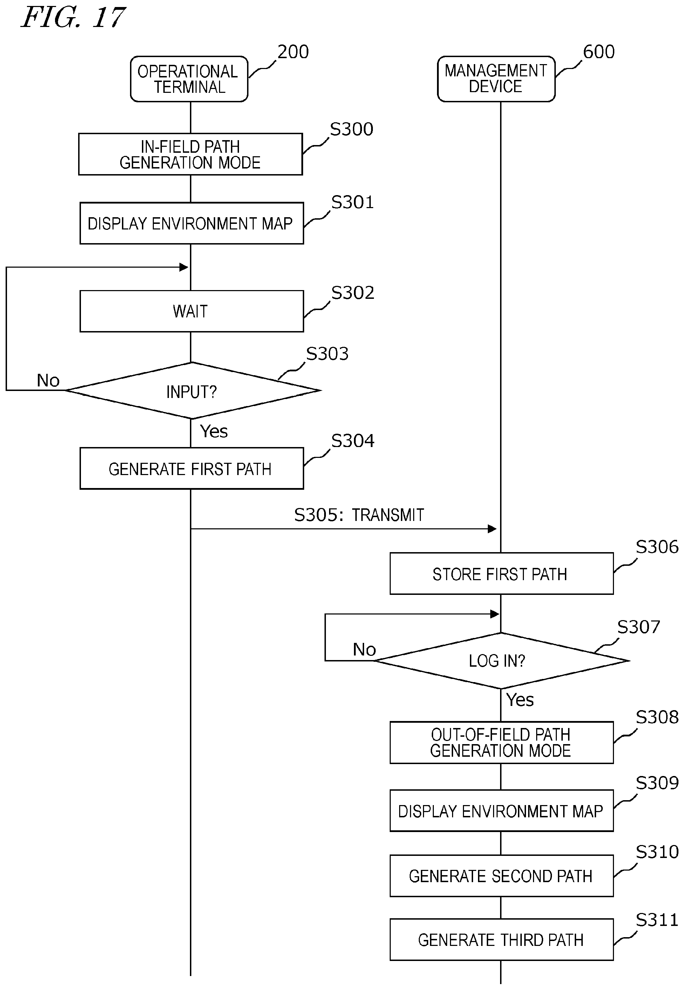

FIG. **17** shows a path generation method performed by the operational terminal **200** and the management device **600** as an example of method for setting the first path **30A** and the second path **30B** by use of different setting screens, different devices or different types of application software. Note that the operational terminal **200** shown in FIG. **17** may be replaced with the terminal device **400** or the ECU **185.** The path generation method is not limited to the method in the present embodiment.

As shown in FIG. **17****,** when the user performs a predetermined manipulation on the operational terminal **200,** the operational terminal **200** is put into the in-field path generation mode (step **S300).** In the in-field path generation mode, the operational terminal **200** displays the environment map on the display screen thereof (step **S301)** and waits for an input from the user (step **S302).** In the state of waiting for the input, the operational terminal **200** waits for an input of information necessary to create the first path **30A** inside the field. Such information may include information on, for example, the positions of the beginning point **S,** the ending point **G,** the work area **72,** the headland **74** and the like inside the field. When the information on the positions of the beginning point **S,** the ending point **G,** the work area **72,** the headland **74** and the like is input (Yes in step **S303),** the operational terminal **200** generates the first path **30A** inside the field as shown in FIG. **16** (step **S304**). Upon generation of the first path **30A,** the operational terminal **200** transmits information on the generated first path **30A** to the management device **600** (step **S305).** Upon receipt of the information on the first path **30A,** the management device **600** stores the information (step **S306).**

Meanwhile, when the user performs a predetermined manipulation on the terminal device **400** to log in the management device **600** (Yes in step **S307),** the management device **600** is put into the out-of-field path generation mode (step **S308).** In the out-of-field path generation mode, the management device **600** causes the display screen of the terminal device **400** to display the environment map (step **S309),** and refers to the work plan to generate the second path **30B** in accordance with the work plan (step **S310).** In the out-of-field path generation mode, the management device **600** refers to the information on the first path **30A** to generate the third path **30C** connecting the beginning point S of the first path **30A** and a portion of the second path **30B** corresponding to the entrance of the field to each other (step **S311).** The management device **600** may further generate the fourth path **30D** connecting the ending point **G** of the first path **30A** and a portion of the second path **30B** corresponding to the exit of the field to each other. The management device **600** may cause the display screen of the terminal device **400** to display the first path **30A,** the second path **30B,** the third path **30C** and the fourth path **30D** on the map. This allows the user to check the generated paths.

As described above, the first path **30A** inside the field may be set in accordance with the state inside the field. By contrast, the second path **30B** along the road may be set in accordance with the state of the road. The management device **600** connects the first path **30A** inside the field and the second path **30B** outside the field, which are separately set, to each other to generate a local path along which the work vehicle **100** is to travel within a predetermined time period. In this manner, the path planning is performed in consideration of the attribute of each of the field **70** and the road **76,** so that a preferred path in accordance with the states inside and outside the field can be generated.

In the example shown in FIG. **16****,** the work plan indicates that the agricultural work is performed in a plurality of fields **70** in a predetermined time period (e.g., on one working day). Therefore, the management device **600** generates a path from the waiting area **96** to one field **70** and a path between the fields **70,** along the roads **76.** A portion from such an example, there is a case where the work plan indicates that the agricultural work is performed in one field **70** in a predetermined time period. In this case, the management device **600** generates a path from the waiting area **96** to one field **70,** along the roads **76** leading to the field **70.** The management device **600** further generates a path from the field **70** where the final task of agricultural work is to be performed in the predetermined time period, as indicated by the work plan, to a return site to which the work vehicle **100** is to return, along the roads **76.** In the example shown in FIG. **16****,** the waiting area **96** corresponds to the return site. The return site may be a site different from the waiting area **96** (e.g., the repository **90** shown in FIG. **14****).**

As a result of the above-described operation, the management device **600** can generate a global path from the departure point of the work vehicle **100** to the target point via one or more fields **70** for every predetermined time period (e.g., every working day). The management device **600** can generate a global path for the work vehicle **100** such that the work vehicle **100** performs the agricultural work in the specified field **70** at the specified point of time in accordance with the schedule previously created. Information on the generated global path is transmitted to the work vehicle **100** and stored in the storage device **170.** The ECU **184,** performing self-driving control, controls the ECUs **181** and **182** such that the work vehicle **100** travels along the global path. This allows the work vehicle **100** to begin traveling along the global path.

There may be a case where while the work vehicle **100** is traveling outside the field, there is an obstacle such as a pedestrian or another vehicle on the global path or in the vicinity thereof. In order to avoid the work vehicle **100** colliding against the obstacle, while the work vehicle **100** is traveling, the ECU **185** of the controller **180** consecutively generates a local path along which the work vehicle **100** can avoid the obstacle. While the work vehicle **100** is traveling, the ECU **185** generates a local path based on sensing data acquired by the sensing device included in the work vehicle **100** (the obstacle sensors **130,** the LiDAR sensor **140,** the cameras **120,** etc.). The local path is defined by a plurality of waypoints along a portion of the second path **30B.** Based on the sensing data, the ECU **185** determines whether or not there is an obstacle existing on the road on which the work vehicle **100** is proceeding or in the vicinity thereof. In the case where there is such an obstacle, the ECU **185** sets a plurality of waypoints such that the obstacle is avoided, and thus generates a local path. In the case where there is no such obstacle, the ECU **185** generates a local path substantially parallel to the second path **30B.** Information representing the generated local path is transmitted to the ECU **184** responsible for self-driving control. The ECU **184** controls the ECU **181** and the ECU **182** such that the work vehicle **100** travels along the local path. This allows the work vehicle **100** to travel while avoiding the obstacle. In the case where there is a traffic signal on the road on which the work vehicle **100** is traveling, the work vehicle **100** may recognize the traffic signal based on, for example, an image captured by the cameras **120** and perform an operation of halting at a red light and moving forward at a green light.

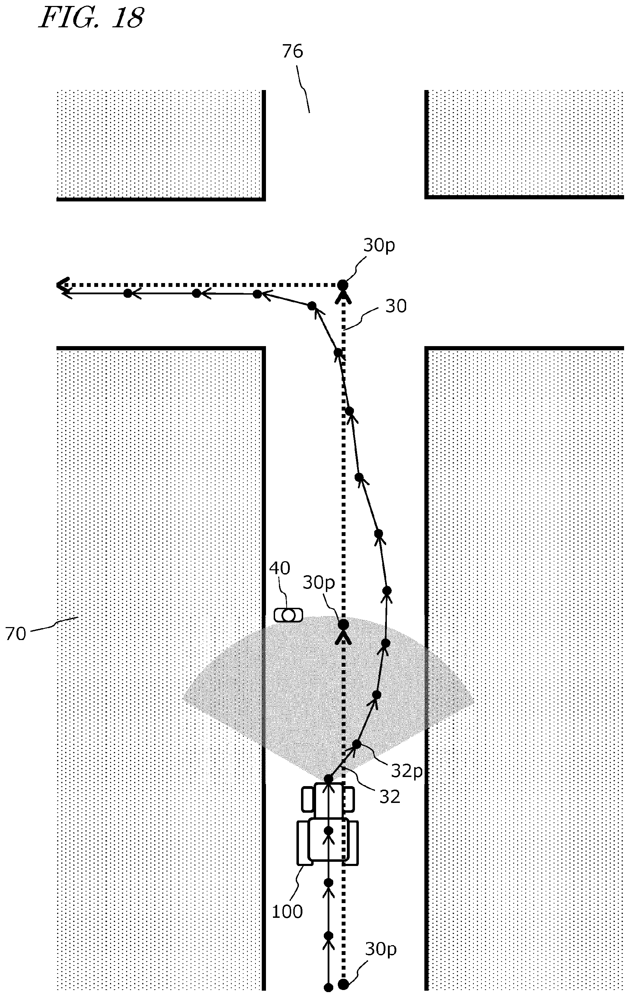

FIG. **18** is a diagram showing an example of global path and an example of local path generated in an environment where there is an obstacle. FIG. **18** represents, as an example, a global path **30** by the broken line arrows, and represents, as an example, local paths **32** consecutively generated during travel of the work vehicle **100** by the solid line arrows. The global path **30** is defined by a plurality of waypoints **30p.** The local paths **32** are defined by a plurality of waypoints **32p** set at a shorter interval than the waypoints **30p.** The waypoints each have information on, for example, the position and the orientation. The management device **600** sets the plurality of waypoints **30p** at a plurality of points including an intersection of the roads **76** to generate the global path **30.** The interval between the waypoints **30p** is relatively long, and may be, for example, about several meters to about several tens of meters. The ECU **185** sets the plurality of waypoints **32p** based on the sensing data output from the sensing device during travel of the work vehicle **100** to generate the local paths **32.** The interval between the waypoints **32p** of the local paths **32** is shorter than the interval between the waypoints **30p** of the global path **30.** The interval between the waypoints **32p** may be, for example, about several tens of centimeters (cm) to about several meters (m). The local paths **32** are generated in a relatively small range (e.g., a range of about several meters) from the position of the work vehicle **100.** FIG. **18** shows, as an example, a series of local paths **32** generated while the work vehicle **100** travels along the road **76** between the fields **70** and turns left at the intersection. While the work vehicle **100** is moving, the ECU **185** repeats an operation of generating a local path from the position of the work vehicle **100** estimated by the ECU **184** to, for example, a point frontward of the work vehicle **100** by several meters. The work vehicle **100** travels along the local paths consecutively generated.

In the example shown in FIG. **18****,** there is an obstacle **40** (e.g., a human) frontward of the work vehicle **100.** FIG. **18** shows a fan-shaped region as an example of range sensed by the sensing devices such as the cameras **120,** the obstacle sensors **130** or the LiDAR sensor **140** mounted on the work vehicle **100.** In such a state, the ECU **185** generates the local paths **32** such that the obstacle **40** detected based on the sensing data is avoided. The ECU **185** determines whether or not there is a possibility that the work vehicle **100** will collide against the obstacle **40,** based on, for example, the sensing data and the width of the work vehicle **100** (including the width of the implement in the case where the implement is attached). In the case where there is a possibility that the work vehicle **100** will collide against the obstacle **40,** the ECU **185** sets the plurality of waypoints **32p** such that the obstacle **40** is avoided, and generates the local paths **32.** Note that the ECU **185** may recognize the state of the road surface (e.g., being muddy, having a cave-in, etc.) based on the sensing data, in addition to the presence/absence of the obstacle **40,** and in the case where a site on which it is difficult to walk is detected, may generate the local paths **32** such that the local path **32** avoids such a site. The work vehicle **100** travels along the local paths **32.** In the case where the obstacle **40** cannot be avoided in whichever manner the local paths **32** may be set, the controller **180** may halt the work vehicle **100.** At this point, the controller **180** may transmit an alert signal to the terminal device **400** to warn a supervisor. In the case where after the work vehicle **100** halts, the obstacle **40** is moved and it is recognized that there is no risk of collision, the controller **180** may restart the travel of the work vehicle **100.**

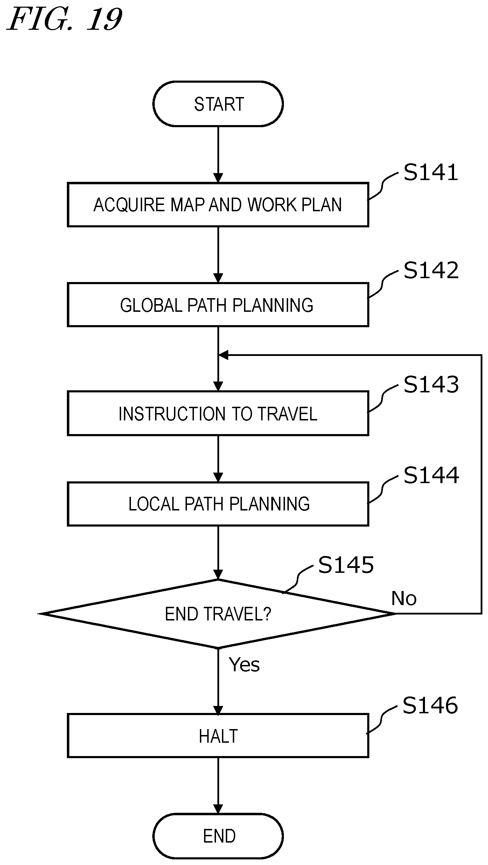

FIG. **19** is a flowchart showing an operation of path planning and travel control according to the present embodiment. An operations of steps **S141 to S146** shown in FIG. **19** is performed, so that the path planning can be performed and the self-traveling of the work vehicle **100** can be controlled.

In the example shown in FIG. **19****,** the management device **600** first acquires a map and a work plan from the storage device **650** (step **S141).** Next, the management device **600** performs global path planning for the work vehicle **100** based on the map and the work plan by the above-described method (step **S142).** The global path planning may be performed at any timing before the work vehicle **100** begins to travel. The global path planning may be performed immediately before the work vehicle **100** begins to travel, or the day before the work vehicle **100** begins to travel or even earlier. The global path may be generated based on information input by the user by use of the terminal device **400** (e.g., based on the departure point, the target point, the waypoints, etc.). The management device **600** transmits the data representing the generated global path to the work vehicle **100.** After this, the management device **600** gives the work vehicle **100** a command to travel, at a predetermined timing. Upon receipt of the command, the controller **180** of the work vehicle **100** controls the drive device **240** to begin the travel of the work vehicle **100** (step **S143)** . This causes the work vehicle **100** to begin traveling. The timing when the work vehicle **100** begins traveling may set to, for example, such an appropriate timing as to allow the work vehicle **100** to arrive at the field before the time when the first task of agricultural work is to begin on each working day indicated by the work plan. While the work vehicle **100** is traveling, the ECU **185** of the controller **180** performs local path planning in order to avoid the collision of the work vehicle **100** and the obstacle by the above-described method (step **S144).** In the case where no obstacle is detected, the ECU **185** generates the local paths substantially parallel to the global path. In the case where an obstacle is detected, the ECU **185** generates local paths along which the obstacle is avoidable. Next, the ECU **184** determines whether or not to end the travel of the work vehicle **100** (step **S145).** In the case where, for example, the local paths along which the obstacle is avoidable cannot be generated, or in the case where the work vehicle **100** has arrived at the target point, the ECU **184** halts the work vehicle **100** (step **S146).** In the case where no obstacle is detected, or in the case where the local paths along which the obstacle is avoidable is generated, the operation returns to step **S143,** where the ECU **184** causes the work vehicle **100** to travel along the generated local paths. After this, the operation in steps **S143 to S145** is repeated until it is determined in step **S145** to end the travel.

With the above-described operation, the work vehicle **100** can automatically travel along the generated paths without colliding against any obstacle.

In the example shown in FIG. **19****,** the global path, once generated, is not changed until the work vehicle **100** arrives at the target point. The global path is not limited to this, and may be modified while the work vehicle **100** is traveling. For example, the ECU **185** may recognize at least one of: the state of the road on which the work vehicle **100** is traveling, the state of the plants in the surroundings of the work vehicle **100,** and the state of weather, based on the sensing data acquired by the sensing devices such as the cameras **120** or the LiDAR sensor **140** while the work vehicle **100** is traveling, and in the case where the recognized state fulfills a predetermined condition, may change the global path. There is a case where while the work vehicle **100** is traveling along the global path, a portion of the road along the global path is difficult to pass along. For example, there is a case where the road is muddy due to a heavy rain, the road surface has a cave-in, or it is impossible to pass along the road due to an accident or any other reason. Alternatively, there is a case where a satellite signal from a GNSS satellite is difficult to be received for the reason that the plants around the agricultural road have grown more than expected or that a new building has been built. In consideration of such a situation, the ECU **185** may detect a road that is difficult to pass along, based on the sensing data acquired during travel of the work vehicle **100** and may change the path such that the post-change path avoids such a road. In the case where the path is changed, the ECU **185** may cause the storage device **170** to store the post-change path and may transmit information on the post-change path to the management device **600.** In this case, the next time a path to the same field is to be generated, the management device **600** may adopt the post-change path. This allows the path planning to be performed flexibly in accordance with a change in the environment.

### [2-4. Update of the map]

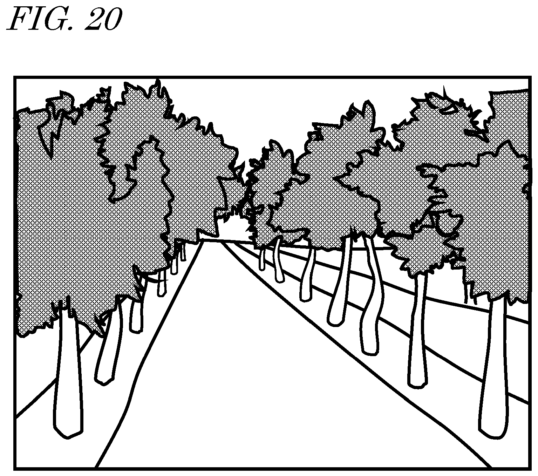

As described above, the global path planning is performed based on the map of the environment where the work vehicle **100** is to travel. The map includes positional information on a plurality of fields in a region where the work vehicle **100** is to travel and the roads around the fields. The map may further include information representing the distribution of objects existing around the roads (e.g., grass, trees, waterways, buildings, etc.). The information representing these objects may be generated based on data acquired by the sensing device such as the LiDAR sensor or the camera while the work vehicle **100** or any other movable body is traveling. In an environment where the plants grow thick along a road or a high building is built around the road, receipt of radio waves from a GNSS satellite or travel of the work vehicle **100** may possibly be prevented. In, for example, an environment where there are trees at a high density around an agricultural road as shown in FIG. **20****,** leaves growing thick high up in the trees form a canopy and act as an obstacle or a multi-reflector against the radio waves from a satellite. For such an agricultural road, it is difficult to perform accurate positioning by GNSS. In order to avoid generation of a path on such a road, the ECU **186** may recognize a structural body based on the sensing data acquired by the sensing device while the work vehicle **100** is traveling, and reflect the recognized structural body on the map. The structural body to be recognized may be, for example, a tree, a building, a waterway, a road sign or the like. The ECU **186** may further recognize at least one of: the state of the road on which the work vehicle **100** is traveling and the state of the plants in the surroundings of the work vehicle **100,** based on the sensing data, and reflect the recognized state on the map.

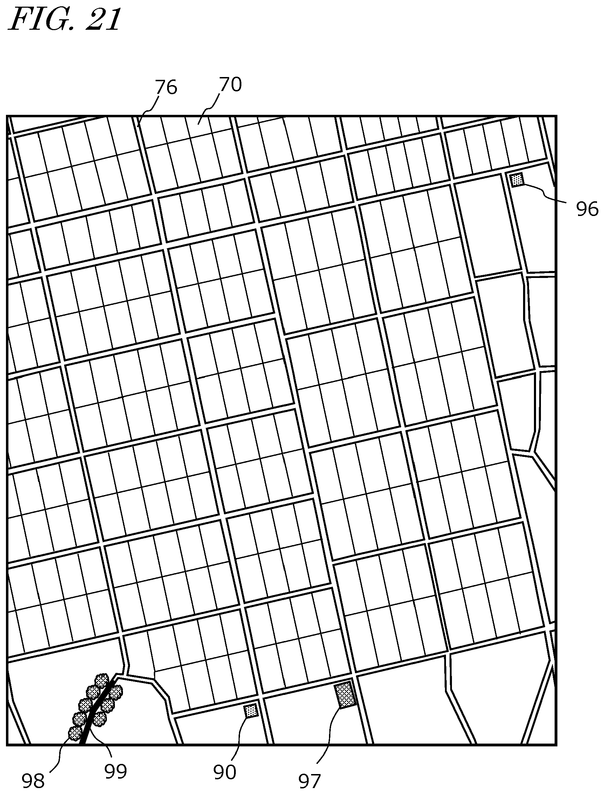

FIG. **21** is a diagram showing an example of map shown in FIG. **13** with the information acquired based on the sensing data being added. In the map shown in FIG. **21****,** information representing a building **97** and trees **98** recognized based on the sensing data is added. In addition, for an agricultural road 99 (shown in black in FIG. 21), along which the trees 98 grow, attribute information, indicating that the agricultural road 99 is difficult to pass along because the receiving strength of the GNSS signal is low, is added. In this manner, a change in the surrounding environment detected by sensing performed while the work vehicle 100 is traveling is reflected on the map, so that the path planning based on the map can be performed more appropriately.

As in the above-described example, in an environment where plants grow thick around the roads, the state of the plants change season by season, and therefore, the ease of passing along the roads may change. For example, in summer than in winter, the ratio of the parts of the roads that are covered with the plants is higher, and the number of roads that are difficult to pass along tends to be larger. In this situation, the ECU **186** may generate a plurality of maps in accordance with the seasons and store the maps in the storage device **170.** For example, the ECU **186** may generate four types of maps for spring, summer, autumn and winter. In these maps, geographical information on the fields, the roads, the waiting areas, the buildings and the like is common, but attribute information on the growing state of the plants or on whether or not it is possible to pass along the roads may be different. The plurality of maps thus generated are transmitted to the management device **600** and recorded in the storage device **650.** The management device **600** may extract the map, corresponding to the season when the agricultural work is to be performed, from the recorded plurality of maps, and generate a path for the work vehicle **100** based on the extracted map. This allows appropriate global path planning in accordance with the season to be realized.

### (Other embodiments)

The configurations and operations in the above-described embodiments are merely examples, and the present disclosure is not limited to the above-described embodiments. Hereinafter, other example embodiments will be described.

In the above-described embodiments, the processor **660** of the management device **600** creates a work plan, generates an environment map, and performs global path planning for the work vehicle **100,** whereas the controller **180** disposed inside the work vehicle **100** performs local path planning and travel control for the work vehicle **100.** Instead of such an embodiment, a portion of the operations assigned to the management device **600** may be performed by the controller **180,** the operational terminal **200** or the terminal device **400.** For example, the generation of the environment map and the generation of the global path may be performed by the controller **180,** the operational terminal **200** or the terminal device **400.**

The management device **600** may manage the operations of a plurality of agricultural machines including the work vehicle **100.** In this case, the management device **600** may perform global path planning and issue travel instructions for each of the agricultural machines based on the schedule of the agricultural work to be performed by each agricultural machine.

A system performing the path planning or self-driving control according to the above-described embodiments can be mounted on an agricultural machine lacking such functions, as an add-on. Such a system may be manufactured and marketed independently from the agricultural machine. A computer program for use in such a system may also be manufactured and marketed independently from the agricultural machine. The computer program may be provided in a form stored in a non-transitory computer-readable storage medium, for example. The computer program may also be provided through downloading via telecommunication lines (e.g., the Internet).

As described above, the present disclosure includes a path planning system, a control system, an agricultural machine, a method and a computer program described in the following items.

### INDUSTRIAL APPLICABILITY

The techniques according to the present disclosure are applicable to a path planning system for agricultural machines, such as tractors, harvesters, rice transplanters, vehicles for crop management, vegetable transplanters, mowers, seeders, spreaders, or agricultural robots, for example.

### REFERENCE SIGNS LIST

**30:** global path, **32:** local path; **40:** obstacle; **50:** GNSS satellite; **60:** reference station; **70:** field; **71:** entrance/exit; **72:** work area; **74:** headland; **76:** road; **80:** network; **90:** repository; **92:** house of the user; **96:** waiting area; **97;** building; **98:** tree; **99:** road difficult to pass along; **100:** work vehicle; **101:** vehicle body; **102:** prime mover (engine); **103:** transmission; **104:** wheel; **105:** cabin; **106:** steering device; **107:** driver's seat; **108:** linkage device; **110:** GNSS unit; **111:** GNSS receiver; **112:** RTK receiver; **115:** inertial measurement unit (IMU); **116:** processing circuit; **120:** camera; **130:** obstacle sensor; **140:** LiDAR sensor; **150:** sensors; **152:** steering wheel sensor; **154:** angle-of-turn sensor **154; 156:** wheel axis sensor; **160:** control system; **170:** storage device **170; 180:** controller; **181-186:** ECU; **190:** communication device; **200:** operational terminal; **210:** operation switches; **220:** buzzer; **240:** drive device; **300:** implement; **340:** drive device; **380:** controller; **390:** communication device; **400:** terminal device; **420:** input device; **430:** display device; **450:** storage device; **460:** processor; **470:** ROM; **480:** RAM; **490:** communication device; **600:** management device; **650:** storage device; **660:** processor; **670:** ROM; **680:** RAM; **690:** communication device

## Claims

1. A path planning system for an agricultural machine that performs self-driving, the path planning system comprising:
a storage device (650) configured to store a map including
positional information of a plurality of fields and a road around the plurality of fields, and
a work plan including information representing an order of agricultural tasks to be performed by the agricultural machine and the fields where the tasks are to be performed; and
a processing unit (600) configured to generate paths (30A, 30B) for the agricultural machine on the map,
wherein the processing unit (600) is configured to:
generate first paths (30A) along which the agricultural machine is to travel while performing agricultural work in respective ones of the fields based on information input by a user, each of the first paths (30A) being generated on a corresponding one of the fields on the map;
generate second paths (30B) including paths connecting fields where the agricultural work is to be performed, the second paths (30B) being generated on the roads on the map; and
connect the first paths (30A) to the second paths (30B) after generating the first paths and the second paths;
**characterized in that**
the work plan includes a date and time when each task is to be performed and the processing unit (600) is configured to generate the second paths at a predetermined timing based on the work plan,
the map further includes information on a plurality of waiting areas (96A, 96B) for the agricultural machine to wait while the agricultural machine does not perform the agricultural work, and
the storage device (650) further stores data indicating a correspondence between the plurality of waiting areas and the plurality of fields, and
the processing unit (600) is further configured for, based on the data and the work plan, for each working day:
determining a first waiting area from which the agricultural machine is to depart and a second waiting area to which the agricultural machine is to go after all tasks of the agricultural work; and
generating, as the second paths,
a path from the first waiting area (96A) to a field where the agricultural work is to be performed first,
the paths connecting fields where the agricultural work is to be performed, and
a path from a field where the agricultural work is to be performed last to the second waiting area (96B).

2. The path planning system of claim 1, wherein the processing unit (600) is configured to:
operate in an in-field path generation mode to generate the first paths (30A) and an out-of-field path generation mode to generate the second paths (30B),
generate the first paths (30A) in the in-field path generation mode in accordance with a first path generation algorithm, and
generate the second paths (30B) in the out-of-field path generation mode in accordance with a second path generation algorithm different from the first path generation algorithm.

3. The path planning system of claim 1 or 2, wherein the processing unit (600) is configured to generate the second paths (30B) so that a portion of each of the second paths (30B) is located at an entrance of a respective one of the fields and generates, for each field, a third path (30C) connecting the portion of the second path at the entrance to a beginning point of a respective one of the first paths (30A).

4. The path planning system of claim 1 or 2, wherein the processing unit (600) is configured to generate the second paths (30B) so that a portion of each of the second paths (30B) is located at an exit of a respective one of the fields and generates for each field a third path (30C) connecting the portion of the second path at the exit to an ending point of a respective one of the first paths (30A).

5. The path planning system of claim 3 or 4, wherein the processing unit (600) is configured to determine a region of each of the fields where the agricultural work has been performed, and for each field, generate the third path (30C) in a region of the field that is other than the region of the field where the agricultural work has been performed.

6. The path planning system of any one of claims 1 to 5, wherein while the agricultural machine is traveling along each of the second paths (30B) generated by the processing unit (600), the processing unit (600) is configured to repeat an operation of generating a local path which is defined by a plurality of waypoints along a portion of each of the second paths (30B) and along which an obstacle is avoidable, based on sensing data acquired by a sensing device included in the agricultural machine, and of outputting information representing the local path to a controller controlling the travel of the agricultural machine.

7. The path planning system of any one of claims 1 to 6, wherein the processing unit (600) is configured to:
recognize at least one of a structural body around the agricultural machine, a state of the road on which the agricultural machine is traveling, or a state of plants around the agricultural machine, based on sensing data acquired by a sensing device included in the agricultural machine,
reflect at least one of the recognized structural body or the recognized state on the map, and
based on the at least one of the recognized structural body or the recognized state, add, on a road on the map, attribute information indicating that the road is difficult to pass along.

8. The path planning system of any one of claims 1 to 7, wherein the processing unit (600) is configured to:
recognize at least one of a state of the road on which the agricultural machine is traveling and a state of plants around the agricultural machine based on sensing data acquired by a sensing device included in the agricultural machine,
reflect the recognized state on the map, and
when the recognized state fulfills a predetermined condition, change the second paths (30B).

9. The path planning system of any one of claims 1 to 8, wherein the processing unit (600) is configured to:
generate a plurality of maps in accordance with seasons each including different attribute information on growing state of plants or on whether or not it is possible to pass along roads,
store the maps in the storage device (650),
extract a map, corresponding to the season when the agricultural machine is to perform the agricultural work, from the plurality of maps, and
generate the first paths (30A) and the second paths (30B) based on the extracted map.

10. An agricultural machine, comprising:
the path planning system of any one of claims 1 to 9;
a controller configured to cause the agricultural machine to travel along the paths generated by the processing unit (600); and
a sensing device configured to sense an environment around the agricultural machine.

11. A method performed by a processor (660) configured to perform path planning for an agricultural machine that performs self-driving, the method comprising:
acquiring from a storage device (650),
a map, including positional information of a plurality of fields and roads around the plurality of fields,
a work plan, including information representing an order of agricultural tasks to be performed by the agricultural machine and the fields where the tasks are to be performed, and
data indicating a correspondence with the plurality of fields;
generating first paths (30A) along which the agricultural machine is to travel while performing agricultural work in respective ones of the fields, based on information input by a user, each of the first paths being generated on a corresponding one of the fields on the map;
generating on the roads on the map second paths (30B) including paths connecting fields where the agricultural work is to be performed based on the work plan; and
connecting the first paths (30A) to the second paths (30B) after generating the first paths (30A) and the second paths (30B);
**characterized in that**
the map further includes a plurality of waiting areas (96A, 96B) for the agricultural machine to wait while the agricultural machine does not perform the agricultural work,
the correspondence is a correspondence between the plurality of waiting areas (96A, 96B) and the plurality of fields, and
the method comprises
generating the second paths (30B) at a predetermined timing based on the work plan and a date and time when each task is to be performed being included in the work plan, and based on the data and the work plan, for each working day:
determining a first waiting area from which the agricultural machine is to depart and a second waiting area to which the agricultural machine is to go after all tasks of the agricultural work; and
generating, as the second paths,
a path from the first waiting area (96A) to a field where the agricultural work is to be performed first,
the paths connecting fields where the agricultural work is to be performed, and
a path from a field where the agricultural work is to be performed last to the second waiting area (96B).

12. A computer program for performing path planning for an agricultural machine that performs self-driving, the computer program being stored on a non-transitory computer-readable storage medium and causing a computer to:
acquire from a storage device (650)
a map, including positional information of a plurality of fields and roads around the plurality of fields,
a work plan, including information representing an order of agricultural tasks to be performed by the agricultural machine and the fields where the tasks are to be performed, and
data indicating a correspondence with the plurality of fields;
generate first paths (30A) along which the agricultural machine is to travel while performing agricultural work in respective ones of the fields, based on information input by a user, each of the first paths being generated on the corresponding one of the fields on the map;
generate on roads on the map second paths (30B) including paths connecting fields where the agricultural work is to be performed based on the work plan; and
connect the first paths (30A) to the second paths (30B) after generating the first paths (30A) and the second paths (30B);
**characterized in that**
the map further includes a plurality of waiting areas (96A, 96B) for the agricultural machine to wait while the agricultural machine does not perform the agricultural work,
the correspondence is a correspondence between the plurality of waiting areas (96A, 96B) and the plurality of fields, and
the computer program is causing the computer to
generate the second paths (30B) at a predetermined timing based on the work plan and a data and time when each task is to be performed being included in the work plan, and based on the data and the work plan, for each working day:
determining a first waiting area from which the agricultural machine is to depart and a second waiting area to which the agricultural machine is to go after all tasks of the agricultural work; and
generating, as the second paths,
a path from the first waiting area (96A) to a field where the agricultural work is to be performed first,
the paths connecting fields where the agricultural work is to be performed, and
a path from a field where the agricultural work is to be performed last to the second waiting area (96B).

## Patentansprüche

1. Pfadplanungssystem für eine landwirtschaftliche Maschine, die Selbstfahren durchführt, das Pfadplanungssystem umfassend:
eine Speichervorrichtung (650), die konfiguriert ist, um eine Karte zu speichern, die Positionsinformationen einer Vielzahl von Feldern und einer Straße um die Vielzahl von Feldern herum beinhaltet, und
einen Arbeitsplan, der Informationen, die eine Reihenfolge landwirtschaftlicher Aufgaben darstellen, die von der landwirtschaftlichen Maschine durchzuführen sind, und die Felder, auf denen die Aufgaben durchzuführen sind, beinhaltet; und
eine Verarbeitungseinheit (600), die konfiguriert ist, um Pfade (30A, 30B) für die landwirtschaftliche Maschine auf der Karte zu erzeugen,
wobei die Verarbeitungseinheit (600) zu Folgendem konfiguriert ist:
Erzeugen erster Pfade (30A), entlang derer die landwirtschaftliche Maschine beim Durchführen landwirtschaftlicher Arbeit auf jeweiligen der Felder fahren soll, basierend auf Informationen, die durch einen Benutzer eingegeben werden, wobei jeder der ersten Pfade (30A) auf einem entsprechenden der Felder auf der Karte erzeugt wird;
Erzeugen zweiter Pfade (30B), die Pfade beinhalten, die Felder verbinden, wo die landwirtschaftliche Arbeit durchzuführen ist, wobei die zweiten Pfade (30B) auf den Straßen auf der Karte erzeugt werden; und
Verbinden der ersten Pfade (30A) mit den zweiten Pfaden (30B) nach Erzeugen der ersten Pfade und der zweiten Pfade;
**dadurch gekennzeichnet, dass**
der Arbeitsplan ein Datum und eine Uhrzeit beinhaltet, an denen jede Aufgabe durchzuführen ist, und die Verarbeitungseinheit (600) konfiguriert ist, um die zweiten Pfade an einem vorbestimmten Zeitpunkt basierend auf dem Arbeitsplan zu erzeugen,
wobei die Karte ferner Informationen über eine Vielzahl von Wartebereichen (96A, 96B) beinhaltet, in denen die landwirtschaftliche Maschine warten kann, während die landwirtschaftliche Maschine die landwirtschaftliche Arbeit nicht durchführt, und
die Speichervorrichtung (650) ferner Daten speichert, die eine Entsprechung zwischen der Vielzahl von Wartebereichen und der Vielzahl von Feldern angeben, und
die Verarbeitungseinheit (600), basierend auf den Daten und dem Arbeitsplan, für jeden Arbeitstag ferner zu Folgendem konfiguriert ist:
Bestimmen eines ersten Wartebereichs, von dem aus die landwirtschaftliche Maschine abfahren soll, und eines zweiten Wartebereichs, zu dem die landwirtschaftliche Maschine nach allen Aufgaben der landwirtschaftlichen Arbeit gehen soll; und
Erzeugen, als die zweiten Pfade,
eines Pfads von dem ersten Wartebereich (96A) zu einem Feld, in dem die landwirtschaftliche Arbeit zuerst durchzuführen ist,
der Pfade, die Felder verbinden, wo die landwirtschaftliche Arbeit durchzuführen ist, und
eines Pfads von einem Feld, wo die landwirtschaftliche Arbeit zuletzt durchzuführen ist, zu dem zweiten Wartebereich (96B).

2. Pfadplanungssystem nach Anspruch 1, wobei die Verarbeitungseinheit (600) zu Folgendem konfiguriert ist:
Betreiben in einem Erzeugungsmodus für feldinternen Pfad, um die ersten Pfade (30A) zu erzeugen, und in einem Erzeugungsmodus für feldexternen Pfad, um die zweiten Pfade (30B) zu erzeugen,
Erzeugen der ersten Pfade (30A) in dem Erzeugungsmodus für feldinternen Pfad gemäß einem ersten Pfaderzeugungsalgorithmus, und
Erzeugen der zweiten Pfade (30B) in dem Erzeugungsmodus für feldexternen Pfad gemäß einem zweiten Pfaderzeugungsalgorithmus, der sich von dem ersten Pfaderzeugungsalgorithmus unterscheidet.

3. Pfadplanungssystem nach Anspruch 1 oder 2, wobei die Verarbeitungseinheit (600) konfiguriert ist, um die zweiten Pfade (30B) zu erzeugen, sodass sich ein Abschnitt von jedem der zweiten Pfade (30B) an einem Eingang eines jeweiligen der Felder befindet, und für jedes Feld einen dritten Pfad (30C) erzeugt, der den Abschnitt des zweiten Pfads an dem Eingang mit einem Anfangspunkt eines jeweiligen der ersten Pfade (30A) verbindet.

4. Pfadplanungssystem nach Anspruch 1 oder 2, wobei die Verarbeitungseinheit (600) konfiguriert ist, um die zweiten Pfade (30B) zu erzeugen, sodass sich ein Abschnitt von jedem der zweiten Pfade (30B) an einem Ausgang eines jeweiligen der Felder befindet, und für jedes Feld einen dritten Pfad (30C) erzeugt, der den Abschnitt des zweiten Pfads an dem Ausgang mit einem Endpunkt eines jeweiligen der ersten Pfade (30A) verbindet.

5. Pfadplanungssystem nach Anspruch 3 oder 4, wobei die Verarbeitungseinheit (600) konfiguriert ist, um einen Bereich von jedem der Felder zu bestimmen, wo die landwirtschaftliche Arbeit durchgeführt wurde, und für jedes Feld den dritten Pfad (30C) in einem Bereich des Felds erzeugt, der sich von dem Bereich des Felds unterscheidet, wo die landwirtschaftliche Arbeit durchgeführt wurde.

6. Pfadplanungssystem nach einem der Ansprüche 1 bis 5, wobei, während die landwirtschaftliche Maschine entlang jedes der von der Verarbeitungseinheit (600) erzeugten zweiten Pfade (30B) fährt, die Verarbeitungseinheit (600) konfiguriert ist, um einen Vorgang zu wiederholen, bei dem ein lokaler Pfad erzeugt wird, der durch eine Vielzahl von Pfadpunkten entlang eines Abschnitts von jedem der zweiten Pfade (30B) definiert ist und entlang dessen ein Hindernis vermeidbar ist, basierend auf Sensordaten, die von einer in die landwirtschaftliche Maschine integrierten Sensoreinrichtung erfasst werden, und Informationen, die den lokalen Pfad darstellen, an eine Steuerung ausgibt, welche die Fahrt der landwirtschaftlichen Maschine steuert.

7. Pfadplanungssystem nach einem der Ansprüche 1 bis 6, wobei die Verarbeitungseinheit (600) zu Folgendem konfiguriert ist:
Erkennen mindestens eines von einem Strukturkörper um die landwirtschaftliche Maschine, einem Zustand der Straße, auf der die landwirtschaftliche Maschine fährt, oder einem Zustand von Pflanzen um die landwirtschaftliche Maschine, basierend auf Sensordaten die von einer in die landwirtschaftliche Maschine integrierten Sensoreinrichtung erfasst werden,
Abbilden mindestens eines von dem erkannten Strukturkörper oder dem erkannten Zustand auf der Karte, und
basierend auf mindestens einem von dem erkannten Strukturkörper oder dem erkannten Zustand, Hinzufügen auf einer Straße auf der Karte, von Attributinformationen, die angeben, dass die Straße schwer passierbar ist.

8. Pfadplanungssystem nach einem der Ansprüche 1 bis 7, wobei die Verarbeitungseinheit (600) zu Folgendem konfiguriert ist:
Erkennen mindestens eines von einem Zustand der Straße, auf der die landwirtschaftliche Maschine fährt, und einem Zustand von Pflanzen um die landwirtschaftliche Maschine, basierend auf Sensordaten, die von einer in die landwirtschaftliche Maschine integrierten Sensoreinrichtung erfasst werden,
Abbilden des erkannten Zustands auf der Karte, und
wenn der erkannte Zustand eine vorbestimmte Bedingung erfüllt, Ändern der zweiten Pfade (30B).

9. Pfadplanungssystem nach einem der Ansprüche 1 bis 8, wobei die Verarbeitungseinheit (600) zu Folgendem konfiguriert ist:
Erzeugen einer Vielzahl von Karten gemäß Jahreszeiten, die jeweils unterschiedliche Attributinformationen über den Wachstumszustand von Pflanzen oder darüber beinhalten, ob es möglich ist, Straßen zu passieren,
Speichern der Karten in der Speichervorrichtung (650),
Extrahieren einer Karte, die der Jahreszeit entspricht, in der die landwirtschaftliche Maschine die landwirtschaftliche Arbeit durchführen soll, aus der Vielzahl von Karten, und
Erzeugen der ersten Pfade (30A) und der zweiten Pfade (30B) basierend auf der extrahierten Karte.

10. Landwirtschaftliche Maschine, umfassend:
das Pfadplanungsystem nach einem der Ansprüche 1 bis 9;
eine Steuerung, die konfiguriert ist, um die landwirtschaftliche Maschine entlang der von der Verarbeitungseinheit (600) erzeugten Pfade fahren zu lassen; und
eine Sensorvorrichtung, die konfiguriert ist, eine Umgebung um die landwirtschaftliche Maschine zu erfassen.

11. Verfahren, durchgeführt von einem Prozessor (660), der zum Durchführen von Pfadplanung für eine landwirtschaftliche Maschine konfiguriert ist, die Selbstfahren durchführt, das Verfahren umfassend:
Erfassen, von einer Speichervorrichtung (650),
einer Karte, die Positionsinformationen einer Vielzahl von Feldern und Straßen um die Vielzahl von Feldern beinhaltet,
eines Arbeitsplans, der Informationen, die eine Reihenfolge landwirtschaftlicher Aufgaben darstellen, die von der landwirtschaftlichen Maschine durchzuführen sind, und die Felder, in denen die Aufgaben durchzuführen sind, beinhaltet, und
Daten, die eine Entsprechung zu der Vielzahl von Feldern angeben;
Erzeugen erster Pfade (30A), entlang derer die landwirtschaftliche Maschine während der Ausführung landwirtschaftlicher Arbeiten in den jeweiligen Feldern fahren soll, basierend auf Informationen, die von einem Benutzer eingegeben werden, wobei jeder der ersten Pfade auf einem entsprechenden Feld auf der Karte erzeugt wird;
Erzeugen auf den Straßen auf der Karte von zweiten Pfaden (30B), einschließlich Pfaden, die Felder verbinden, in denen die landwirtschaftliche Arbeit gemäß dem Arbeitsplan durchzuführen ist; und
Verbinden der ersten Pfade (30A) mit den zweiten Pfaden (30B) nach Erzeugen der ersten Pfade (30A) und der zweiten Pfade (30B);
**dadurch gekennzeichnet, dass**
die Karte ferner eine Vielzahl von Wartebereichen (96A, 96B) beinhaltet, in denen die landwirtschaftliche Maschine warten kann, während die landwirtschaftliche Maschine die landwirtschaftliche Arbeit nicht durchführt,
die Entsprechung eine Entsprechung zwischen der Vielzahl von Wartebereichen (96A, 96B) und der Vielzahl von Feldern ist, und
das Verfahren Folgendes umfasst
Erzeugen der zweiten Pfade (30B) an einem vorbestimmten Zeitpunkt basierend auf dem Arbeitsplan und einem Datum und einer Uhrzeit, an denen jede Aufgabe durchzuführen ist, die in dem Arbeitsplan beinhaltet sind, und basierend auf den Daten und dem Arbeitsplan für jeden Arbeitstag:
Bestimmen eines ersten Wartebereichs, von dem aus die landwirtschaftliche Maschine abfahren soll, und eines zweiten Wartebereichs, zu dem die landwirtschaftliche Maschine nach allen Aufgaben der landwirtschaftlichen Arbeit gehen soll; und
Erzeugen, als die zweiten Pfade,
eines Pfads von dem ersten Wartebereich (96A) zu einem Feld, in dem die landwirtschaftliche Arbeit zuerst durchzuführen ist,
der Pfade, die Felder verbinden, in denen die landwirtschaftliche Arbeit durchzuführen ist, und
eines Pfads von einem Feld, in dem die landwirtschaftliche Arbeit zuletzt durchzuführen ist, zu dem zweiten Wartebereich (96B).

12. Computerprogramm zum Durchführen von Pfadplanung für eine landwirtschaftliche Maschine, die Selbstfahren durchführt, wobei das Computerprogramm auf einem nicht-flüchtigen, computerlesbaren Speichermedium gespeichert ist und einen Computer zu Folgendem veranlasst:
Erfassen von einer Speichervorrichtung (650)
einer Karte, die Positionsinformationen einer Vielzahl von Feldern und Straßen um die Vielzahl von Feldern beinhaltet,
eines Arbeitsplans, der Informationen, die eine Reihenfolge landwirtschaftlicher Aufgaben darstellen, die von der landwirtschaftlichen Maschine durchzuführen sind, und die Felder, in denen die Aufgaben durchzuführen sind, beinhaltet, und
Daten, die eine Entsprechung zu der Vielzahl von Feldern angeben;
Erzeugen erster Pfade (30A), entlang derer die landwirtschaftliche Maschine während der Ausführung landwirtschaftlicher Arbeiten in den jeweiligen Feldern fahren soll, basierend auf Informationen, die von einem Benutzer eingegeben werden, wobei jeder der ersten Pfade auf einem entsprechenden Feld auf der Karte erzeugt wird;
Erzeugen auf Straßen auf der Karte von zweiten Pfaden (30B), einschließlich Pfaden, die Felder verbinden, in denen die landwirtschaftliche Arbeit gemäß dem Arbeitsplan durchzuführen ist; und
Verbinden der ersten Pfade (30A) mit den zweiten Pfaden (30B) nach Erzeugen der ersten Pfade (30A) und der zweiten Pfade (30B);
**dadurch gekennzeichnet, dass**
die Karte ferner eine Vielzahl von Wartebereichen (96A, 96B) beinhaltet, in denen die landwirtschaftliche Maschine warten kann, während die landwirtschaftliche Maschine die landwirtschaftliche Arbeit nicht durchführt,
die Entsprechung eine Entsprechung zwischen der Vielzahl von Wartebereichen (96A, 96B) und der Vielzahl von Feldern ist, und
das Computerprogramm den Computer zu Folgendem veranlasst,
Erzeugen der zweiten Pfade (30B) an einem vorbestimmten Zeitpunkt basierend auf dem Arbeitsplan und einem Datum und einer Uhrzeit, an denen jede Aufgabe durchzuführen ist, die in dem Arbeitsplan beinhaltet sind, und basierend auf den Daten und dem Arbeitsplan für jeden Arbeitstag:
Bestimmen eines ersten Wartebereichs, von dem aus die landwirtschaftliche Maschine abfahren soll, und eines zweiten Wartebereichs, zu dem die landwirtschaftliche Maschine nach allen Aufgaben der landwirtschaftlichen Arbeit gehen soll; und
Erzeugen, als die zweiten Pfade,
eines Pfads von dem ersten Wartebereich (96A) zu einem Feld, in dem die landwirtschaftliche Arbeit zuerst durchzuführen ist,
der Pfade, die Felder verbinden, in denen die landwirtschaftliche Arbeit durchzuführen ist, und
eines Pfads von einem Feld, in dem die landwirtschaftliche Arbeit zuletzt durchzuführen ist, zu dem zweiten Wartebereich (96B).

## Revendications

1. Système de planification de trajectoire pour une machine agricole effectuant une conduite autonome, le système de planification de trajectoire comprenant :
un dispositif de stockage (650) configuré pour stocker une carte comprenant
des informations de position d'une pluralité de champs et d'une route aux alentours de la pluralité de champs, et
un plan de travail comprenant des informations représentant un ordre de tâches agricoles à effectuer par la machine agricole et les champs où les tâches doivent être effectuées ; et
une unité de traitement (600) configurée pour générer des trajectoires (30A, 30B) pour la machine agricole sur la carte,
dans lequel l'unité de traitement (600) est configurée pour :
générer des premières trajectoires (30A) selon lesquelles la machine agricole doit se déplacer tout en effectuant un travail agricole dans des champs respectifs parmi les champs sur la base d'informations entrées par un utilisateur, chacune des premières trajectoires (30A) étant générée sur un champ correspondant des champs sur la carte ;
générer des deuxièmes trajectoires (30B) comprenant des trajectoires reliant les champs où le travail agricole doit être effectué, les deuxièmes trajectoires (30B) étant générées sur les routes de la carte ; et
relier les premières trajectoires (30A) aux deuxièmes trajectoires (30B) après avoir généré les premières trajectoires et les deuxièmes trajectoires ;
**caractérisé en ce que**
le plan de travail comprend une date et une heure auxquelles chaque tâche doit être effectuée et l'unité de traitement (600) est configurée pour générer les deuxièmes trajectoires à un instant prédéterminé sur la base du plan de travail,
la carte comprend en outre des informations sur une pluralité de zones d'attente (96A, 96B) permettant à la machine agricole d'attendre lorsqu'elle n'effectue pas le travail agricole, et
le dispositif de stockage (650) stocke en outre des données indiquant une correspondance entre la pluralité de zones d'attente et la pluralité de champs, et
l'unité de traitement (600) est en outre configurée, sur la base des données et du plan de travail, pour chaque jour de travail, pour :
déterminer une première zone d'attente à partir de laquelle la machine agricole doit partir et une deuxième zone d'attente vers laquelle la machine agricole doit aller une fois toutes les tâches du travail agricole terminées ; et
générer, en tant que deuxièmes trajectoires,
une trajectoire de la première zone d'attente (96A) vers un champ dans lequel le travail agricole doit être effectué en premier,
les trajectoires reliant les champs où le travail agricole doit être effectué, et
une trajectoire d'un champ où le travail agricole doit être effectué en dernier vers la deuxième zone d'attente (96B).

2. Système de planification de trajectoire selon la revendication 1, dans lequel l'unité de traitement (600) est configurée pour :
fonctionner dans un mode de génération de trajectoire en champ pour générer les premières trajectoires (30A) et dans un mode de génération de trajectoire hors champ pour générer les deuxièmes trajectoires (30B),
générer les premières trajectoires (30A) dans le mode de génération de trajectoire en champ conformément à un premier algorithme de génération de trajectoire, et
générer les deuxièmes trajectoires (30B) dans le mode de génération de trajectoire hors champ conformément à un deuxième algorithme de génération de trajectoire, différent du premier algorithme de génération de trajectoire.

3. Système de planification de trajectoire selon la revendication 1 ou 2, dans lequel l'unité de traitement (600) est configurée pour générer les deuxièmes trajectoires (30B) de sorte qu'une partie de chacune des deuxièmes trajectoires (30B) est située à une entrée d'un champ respectif des champs et génère, pour chaque champ, une troisième trajectoire (30C) reliant la partie de la deuxième trajectoire à l'entrée à un point de départ d'une trajectoire respective des premières trajectoires (30A).

4. Système de planification de trajectoire selon la revendication 1 ou 2, dans lequel l'unité de traitement (600) est configurée pour générer les deuxièmes trajectoires (30B) de sorte qu'une partie de chacune des deuxièmes trajectoires (30B) est située à une sortie d'un champ respectif des champs et génère, pour chaque champ, une troisième trajectoire (30C) reliant la partie de la deuxième trajectoire à la sortie à un point d'arrivée d'une trajectoire respective des premières trajectoires (30A).

5. Système de planification de trajectoire selon la revendication 3 ou 4, dans lequel l'unité de traitement (600) est configurée pour déterminer une région de chacun des champs où le travail agricole a été effectué, et, pour chaque champ, générer la troisième trajectoire (30C) dans une région du champ autre que la région du champ où le travail agricole a été effectué.

6. Système de planification de trajectoire selon l'une quelconque des revendications 1 à 5, dans lequel, pendant que la machine agricole se déplace le long de chacune des deuxièmes trajectoires (30B) générées par l'unité de traitement (600), l'unité de traitement (600) est configurée pour répéter une opération consistant à générer une trajectoire locale qui est définie par une pluralité de points de passage le long d'une partie de chacune des deuxièmes trajectoires (30B) et le long de laquelle un obstacle est évitable, sur la base de données de détection acquises par un dispositif de détection inclus dans la machine agricole, et à fournir en sortie des informations représentant la trajectoire locale à un contrôleur commandant le déplacement de la machine agricole.

7. Système de planification de trajectoire selon l'une quelconque des revendications 1 à 6, dans lequel l'unité de traitement (600) est configurée pour :
reconnaître au moins l'un parmi un corps de structure autour de la machine agricole, un état de la route sur laquelle la machine agricole se déplace, ou un état des plantes autour de la machine agricole, sur la base de données de détection acquises par un dispositif de détection inclus dans la machine agricole,
refléter au moins l'un du corps de structure reconnu ou de l'état reconnu sur la carte, et
sur la base de l'au moins du corps de structure reconnu ou de l'état reconnu, ajouter, sur une route de la carte, des informations d'attribut indiquant que la route est difficile à emprunter.

8. Système de planification de trajectoire selon l'une quelconque des revendications 1 à 7, dans lequel l'unité de traitement (600) est configurée pour :
reconnaître au moins l'un parmi un état de la route sur laquelle la machine agricole se déplace et un état des plantes autour de la machine agricole, sur la base de données de détection acquises par un dispositif de détection inclus dans la machine agricole,
refléter l'état reconnu sur la carte, et
lorsque l'état reconnu remplit une condition prédéterminée, modifier les deuxièmes trajectoires (30B).

9. Système de planification de trajectoire selon l'une quelconque des revendications 1 à 8, dans lequel l'unité de traitement (600) est configurée pour :
générer une pluralité de cartes en fonction des saisons, chacune comprenant des informations d'attribut différentes sur l'état de croissance des plantes ou sur la possibilité ou non d'emprunter les routes,
stocker les cartes dans le dispositif de stockage (650),
extraire une carte, correspondant à la saison pendant laquelle la machine agricole doit effectuer le travail agricole, parmi la pluralité de cartes, et
générer les premières trajectoires (30A) et les deuxièmes trajectoires (30B) sur la base de la carte extraite.

10. Machine agricole, comprenant :
le système de planification de trajectoire selon l'une quelconque des revendications 1 à 9 ;
un contrôleur configuré pour amener la machine agricole à se déplacer selon les trajectoires générées par l'unité de traitement (600) ; et
un dispositif de détection configuré pour détecter l'environnement autour de la machine agricole.

11. Procédé mis en œuvre par un processeur (660) configuré pour effectuer la planification de trajectoire pour une machine agricole effectuant une conduite autonome, le procédé comprenant :
l'acquisition, à partir d'un dispositif de stockage (650),
d'une carte comprenant des informations de position d'une pluralité de champs et de routes aux alentours de la pluralité de champs,
d'un plan de travail comprenant des informations représentant un ordre de tâches agricoles à effectuer par la machine agricole et les champs dans lesquels les tâches doivent être effectuées, et
de données indiquant une correspondance avec la pluralité de champs ;
la génération de premières trajectoires (30A) le long desquelles la machine agricole doit se déplacer tout en effectuant le travail agricole dans des champs respectifs parmi les champs, sur la base d'informations entrées par un utilisateur, chacune des premières trajectoires étant générée sur un champ correspondant parmi les champs sur la carte ;
la génération, sur les routes de la carte, de deuxièmes trajectoires (30B) comprenant des trajectoires reliant les champs dans lesquels le travail agricole doit être effectué sur la base du plan de travail ; et
le raccordement des premières trajectoires (30A) aux deuxièmes trajectoires (30B) après avoir généré les premières trajectoires (30A) et les deuxièmes trajectoires (30B) ;
**caractérisé en ce que**
la carte comprend en outre une pluralité de zones d'attente (96A, 96B) permettant à la machine agricole d'attendre lorsque la machine agricole n'effectue pas le travail agricole,
la correspondance est une correspondance entre la pluralité de zones d'attente (96A, 96B) et la pluralité de champs, et
le procédé comprend
la génération des deuxièmes trajectoires (30B) à un instant prédéterminé sur la base du plan de travail, et d'une date et d'une heure à laquelle chaque tâche doit être effectuée, lesquelles sont incluses dans le plan de travail, et sur la base des données et du plan de travail, pour chaque jour de travail :
la détermination d'une première zone d'attente à partir de laquelle la machine agricole doit partir, et d'une deuxième zone d'attente vers laquelle la machine agricole doit aller une fois toutes les tâches du travail agricole terminées ; et
la génération, en tant que deuxièmes trajectoires,
d'une trajectoire de la première zone d'attente (96A) vers un champ dans lequel le travail agricole doit être effectué en premier,
des trajectoires reliant les champs dans lesquels le travail agricole doit être effectué, et
d'une trajectoire d'un champ dans lequel le travail agricole doit être effectué en dernier vers la deuxième zone d'attente (96B).

12. Programme informatique pour effectuer une planification de trajectoire pour une machine agricole effectuant une conduite autonome, le programme informatique étant enregistré sur un support de stockage non transitoire lisible par ordinateur et amenant un ordinateur à :
acquérir, à partir d'un dispositif de stockage (650)
une carte comprenant des informations de position d'une pluralité de champs et de routes aux alentours de la pluralité de champs,
un plan de travail comprenant des informations représentant un ordre de tâches agricoles à effectuer par la machine agricole et les champs dans lesquels les tâches doivent être effectuées, et
des données indiquant une correspondance avec la pluralité de champs ;
générer des premières trajectoires (30A) selon lesquelles la machine agricole doit se déplacer tout en effectuant le travail agricole dans des champs respectifs parmi les champs, sur la base d'informations saisies par un utilisateur, chacune des premières trajectoires étant générée sur le champ correspondant sur la carte ;
générer, sur les routes de la carte, des deuxièmes trajectoires (30B) comprenant des trajectoires reliant les champs dans lesquels le travail agricole doit être effectué sur la base du plan de travail ; et
relier les premières trajectoires (30A) aux deuxièmes trajectoires (30B) après avoir généré les premières trajectoires (30A) et les deuxièmes trajectoires (30B) ;
**caractérisé en ce que**
la carte comprend en outre une pluralité de zones d'attente (96A, 96B) permettant à la machine agricole d'attendre lorsque la machine agricole n'effectue pas le travail agricole,
la correspondance est une correspondance entre la pluralité de zones d'attente (96A, 96B) et la pluralité de champs, et
le programme informatique amène l'ordinateur à
générer les deuxièmes trajectoires (30B) à un instant prédéterminé, sur la base du plan de travail et d'une date et d'une heure à laquelle chaque tâche doit être effectuée, lesquelles sont incluses dans le plan de travail, et sur la base des données et du plan de travail, pour chaque jour de travail :
déterminer une première zone d'attente à partir de laquelle la machine agricole doit partir, et une deuxième zone d'attente vers laquelle la machine agricole doit aller une fois toutes les tâches du travail agricole terminées ; et
générer, en tant que deuxièmes trajectoires,
une trajectoire de la première zone d'attente (96A) vers un champ dans lequel le travail agricole doit être effectué en premier,
les trajectoires reliant les champs dans lesquels le travail agricole doit être effectué, et
une trajectoire d'un champ dans lequel le travail agricole doit être effectué en dernier vers la deuxième zone d'attente (96B).
